# EUROPEAN PATENT APPLICATION

(11) **EP 4 561 191 A1**
(43) Date of publication of application: **28.05.2025**
(21) Application number: 23862091.8
(22) Date of filing: 31.07.2023
(51) Int. Cl.: H04W 52/02

(54) **COMMUNICATION METHOD AND COMMUNICATION APPARATUS**

(30) Priority: 05.09.2022 CN 202211078772
(71) Applicant: Huawei Technologies Co., Ltd., Shenzhen, Guangdong 518129 (CN)
(72) Inventor: CHANG, Junren, Shenzhen, Guangdong 518129 (CN); XIE, Xi, Shenzhen, Guangdong 518129 (CN); WANG, Rui, Shenzhen, Guangdong 518129 (CN)
(74) Representative: MERH-IP Matias Erny Reichl Hoffmann Patentanwälte PartG mbB
(86) International application number: PCT/CN2023/110202
(87) International publication number: WO 2024/051391

(57) **Abstract**

Embodiments of this application provide a communication method and apparatus. The method includes: A terminal device obtains first information, where the first information is used to change a state of a main communication module of the terminal device, and the terminal device includes the main communication module and a secondary communication module. The terminal device switches the main communication module from a first state to a second state based on the first information, where the first state includes: the main communication module is in an idle state, an inactive state, and a connected state. Based on the foregoing solution, the terminal device can adjust the state of the main communication module based on the first information, that is, can control state switching of the main communication module, which helps save power of the terminal device.

## Description

This application claims priority to Chinese Patent Application No. 202211078772.8, filed with the China National Intellectual Property Administration on September 5, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In a current communication system, a status of a terminal device includes a connected state, an inactive state, and an idle state. Compared with the connected state, an air interface connection between the terminal device in the idle state and the inactive state and a network device is disconnected, so that power consumption of the terminal device can be reduced.

However, even if the terminal device is in the idle state or the inactive state, the terminal device still needs to perform radio resource management (radio resource management, RRM) measurement for a serving cell and/or a neighboring cell. Consequently, it is difficult for the terminal device to achieve a good power saving effect.

### SUMMARY

Embodiments of this application provide a communication method and a communication apparatus, to reduce a quantity of times of waking up a main circuit, help save power of a terminal device, and reduce power consumption of the terminal device.

According to a first aspect, a communication method is provided. The method may be performed by a terminal device, or may be performed by a chip or a circuit configured in the terminal device. This is not limited in this application.

The method includes: obtaining first information, where the first information is used to change a state of a main communication module of the terminal device, and the terminal device includes the main communication module and a secondary communication module; and switching the main communication module from a first state to a second state based on the first information, where the first state includes: the main communication module is in an idle state, an inactive state, and a connected state.

Based on the foregoing solution, the terminal device can adjust the state of the main communication module based on the first information, that is, can control state switching of the main communication module, which helps save power of the terminal device.

With reference to the first aspect, in some implementations of the first aspect, the first information includes a first condition, the first condition is used to evaluate quality of a first service area of the terminal device, and the first service area is a service area of the terminal device when the main communication module is in the first state; and the switching the main communication module from a first state to a second state based on the first information includes: when the quality of the first service area meets the first condition, switching the main communication module from the first state to the second state.

For example, the first condition includes at least one of the following: a variation of the quality of the first service area within a first time threshold is less than a first variation threshold, where the first time threshold is greater than a time threshold in a low mobility criterion, or the first variation threshold is less than a variation threshold in a low mobility criterion; the quality of the first service area is greater than a first quality threshold, where the first quality threshold is greater than a threshold in a cell center criterion; and the quality of the first service area is greater than a second quality threshold, where the second quality threshold is greater than a threshold in an S criterion.

Based on the foregoing solution, the terminal device can adjust the state of the main communication module based on the first condition, and when the quality of the first service area meets the first condition, the terminal device switches the main communication module from the second state to the first state, thereby helping save power of the terminal device.

Optionally, when the quality of the first service area meets the first condition, the terminal device stops performing measurement on a high-priority frequency.

Based on the foregoing solution, when the quality of the first service area meets the first condition, the terminal device stops performing measurement on the high-priority frequency, so that power consumption of the terminal device can be reduced to a greater extent.

With reference to the first aspect, in some implementations of the first aspect, the method further includes: sending second information to a network device, where the second information is used to request to change the state of the main communication module or indicates that the state of the main communication module changes.

Based on the foregoing solution, the terminal device and the network device can align a current state of the terminal device, for example, whether the terminal device is in the idle state, the inactive state, or a WUR mode. In this way, the network device can efficiently use a WUR resource for a specific terminal device.

Optionally, the second information is carried in a message 3 in a random access procedure.

With reference to the first aspect, in some implementations of the first aspect, the method further includes: receiving third information from the network device, where the third information indicates that the network device allows the terminal device to switch the main communication module from the first state to the second state.

For example, the third information is carried in a radio resource control RRC release message, an RRC connection reject message, or an RRC reconfiguration message.

With reference to the first aspect, in some implementations of the first aspect, the first information indicates to switch the main communication module from the first state to the second state.

Based on the foregoing solution, the network device can control the terminal device to adjust the state of the main communication module, and when the quality of the first service area meets the first condition, the network device can indicate the terminal device to switch the main communication module from the second state to the first state, thereby helping save power of the terminal device.

For example, the first information is carried in a radio resource control RRC release message or an RRC connection reject message.

With reference to the first aspect, in some implementations of the first aspect, the method further includes: sending a measurement result of a first service area to a network device, where the first service area is a service area of the terminal device when the main communication module is in the first state.

With reference to the first aspect, in some implementations of the first aspect, the method further includes: sending fourth information to the network device, where the fourth information indicates that the terminal device tends to enter the idle state when exiting the connected state, or tends to enter the inactive state when exiting the connected state, or tends to enter the second state when exiting the connected state.

With reference to the first aspect, in some implementations of the first aspect, the method further includes: receiving first wake-up radio WUR by using the secondary communication module, where the first WUR is used to determine quality of a second service area of the terminal device, and the second service area is a service area of the terminal device when the main communication module is in the second state; and when the quality of the second service area does not meet a second condition, switching the main communication module from the second state to the first state.

Based on the foregoing solution, when the quality of the second service area meets the second condition, the main communication module of the terminal device may remain in the second state. In this way, a better power saving effect can be achieved. When the quality of the second service area does not meet the second condition, the main communication module of the terminal device may switch to the first state. In this way, it can be ensured that communication performance of the terminal device is not affected.

For example, the second condition includes at least one of the following: a variation of the quality of the second service area within a second time threshold is less than a second variation threshold, where the second time threshold is greater than a time threshold in a low mobility criterion, or the second variation threshold is less than a variation threshold in a low mobility criterion; the quality of the second service area is greater than a third quality threshold, where the third quality threshold is greater than a threshold in a cell center criterion; and the quality of the second service area is greater than a fourth quality threshold, where the fourth quality threshold is greater than a threshold in an S criterion.

Optionally, the method further includes: receiving the second condition from the network device.

With reference to the first aspect, in some implementations of the first aspect, the method further includes: sending sixth information to the network device, where the sixth information indicates that the state of the main communication module changes.

Based on the foregoing solution, the terminal device and the network device can align a current state of the terminal device, for example, whether the terminal device is in the idle state, the inactive state, or a WUR mode. In this way, the network device can efficiently use a WUR resource for a specific terminal device.

Specifically, the sixth information may be carried in a message 3 in a random access procedure.

For example, the sixth information is an identifier of the terminal device when the main communication module is in the second state or an identifier of the terminal device corresponding to the secondary communication module when the main communication module is in the second state.

With reference to the first aspect, in some implementations of the first aspect, the method further includes: listening to second WUR by using the secondary communication module, where the second WUR indicates the terminal device to receive a paging message by using the main communication module; and switching the main communication module from the second state to the first state when the second WUR is detected through listening.

Based on the foregoing solution, the terminal device in the WUR mode may determine, by monitoring the second WUR, whether to wake up the main communication module. In this way, the terminal device can achieve a good power saving effect, and it can be ensured that normal communication of the terminal device is not affected.

With reference to the first aspect, in some implementations of the first aspect, the method further includes: receiving first configuration information from the network device, where the first configuration information is used to configure the first WUR and/or the second WUR, the first configuration information includes fifth information, and the fifth information indicates that the first WUR is used for measurement and/or the second WUR is used for wake-up.

Based on the foregoing solution, the network device may send the first configuration information and/or the fifth information to the terminal device, to indicate the terminal device to more accurately receive the first WUR and the second WUR, thereby ensuring performance of the terminal device in the WUR mode.

With reference to the first aspect, in some implementations of the first aspect, when the main communication module switches from the second state to the first state, the method further includes: switching from the second state to the idle state or the inactive state based on an RRC release message or an RRC reconfiguration message, where the RRC release message or the RRC reconfiguration message indicates that the first state needs to be selected as the idle state or the inactive state when the terminal device switches from the second state to the first state.

Optionally, when the main communication module is in the second state, the terminal device does not listen to or update system information.

Based on the foregoing solution, when the main communication module is in the second state, the terminal device does not listen to or update the system information, so that power consumption of the terminal device can be reduced to a greater extent.

With reference to the first aspect, in some implementations of the first aspect, the method further includes: sending seventh information to the network device, where the seventh information indicates that the terminal device does not listen to or update the system information or stops listening to or updating the system information when the main communication module is in the second state.

Optionally, after the switching the main communication module from the second state to the first state, the method further includes: performing cell selection and receiving the system information in a selected cell.

With reference to the first aspect, in some implementations of the first aspect, when the main communication module is in the first state, the secondary communication module is in a third state or a fourth state, where the third state includes: the secondary communication module is in an on state, a working state, or an active state, and the fourth state includes: the secondary communication module is in an off state, a dormant state, or an inactive state.

According to a second aspect, a communication method is provided. The method may be performed by a network device, or may be performed by a chip or a circuit configured in the network device. This is not limited in this application.

The method includes: determining first information, where the first information is used by a terminal device to switch a main communication module from a first state to a second state, the first state includes: the main communication module is in an idle state, an inactive state, and a connected state, and the terminal device includes the main communication module and a secondary communication module; and sending the first information to the terminal device.

With reference to the second aspect, in some implementations of the second aspect, the first information includes a first condition, the first condition is used to evaluate quality of a first service area of the terminal device, the first service area is a service area of the terminal device when the main communication module is in the first state, and the first condition includes at least one of the following: a variation of the quality of the first service area within a first time threshold is less than a first variation threshold, where the first time threshold is greater than a time threshold in a low mobility criterion, or the first variation threshold is less than a variation threshold in a low mobility criterion; the quality of the first service area is greater than a first quality threshold, where the first quality threshold is greater than a threshold in a cell center criterion; and the quality of the first service area is greater than a second quality threshold, where the second quality threshold is greater than a threshold in an S criterion.

With reference to the second aspect, in some implementations of the second aspect, the method further includes: receiving second information from the terminal device, where the second information is used to request to change the state of the main communication module or indicates that the state of the main communication module changes.

For example, the second information is carried in a message 3 in a random access procedure.

With reference to the second aspect, in some implementations of the second aspect, the method further includes: sending third information to the terminal device, where the third information indicates that the terminal device is allowed to switch the main communication module from the first state to the second state.

For example, the third information is carried in a radio resource control RRC release message, an RRC connection reject message, or an RRC reconfiguration message.

With reference to the second aspect, in some implementations of the second aspect, the first information indicates to switch the main communication module from the first state to the second state.

For example, the first information is carried in a radio resource control RRC release message or an RRC connection reject message.

With reference to the second aspect, in some implementations of the second aspect, the method further includes: receiving a measurement result of a first service area from the terminal device, where the first service area is a service area of the terminal device when the main communication module is in the first state; and the sending the first information to the terminal device includes: when the measurement result of the first service area meets a preset condition, sending the first information to the terminal device.

With reference to the second aspect, in some implementations of the second aspect, the method further includes: receiving fourth information from the terminal device, where the fourth information indicates that the terminal device tends to enter the idle state when exiting the connected state, or tends to enter the inactive state when exiting the connected state, or tends to enter the second state when exiting the connected state; and the sending the first information to the terminal device includes: when the fourth information indicates that the terminal device tends to enter the second state when exiting the connected state, sending the first information to the terminal device.

With reference to the second aspect, in some implementations of the second aspect, the method further includes: sending first wake-up radio WUR to the terminal device, where the first WUR is used to determine quality of a second service area of the terminal device, and the second service area is a service area of the terminal device when the main communication module is in the second state.

With reference to the second aspect, in some implementations of the second aspect, the method further includes: sending a second condition to the terminal device, where the second condition includes at least one of the following: a variation of the quality of the second service area within a second time threshold is less than a second variation threshold, where the second time threshold is greater than a time threshold in a low mobility criterion, or the second variation threshold is less than a variation threshold in a low mobility criterion; the quality of the second service area is greater than a third quality threshold, where the third quality threshold is greater than a threshold in a cell center criterion; and the quality of the second service area is greater than a fourth quality threshold, where the fourth quality threshold is greater than a threshold in an S criterion.

With reference to the second aspect, in some implementations of the second aspect, the method further includes: sending sixth information to the network device, where the sixth information indicates that the state of the main communication module changes.

For example, the sixth information is carried in a message 3 in a random access procedure.

Optionally, the sixth information is an identifier of the terminal device when the main communication module is in the second state or an identifier of the terminal device corresponding to the secondary communication module when the main communication module is in the second state.

With reference to the second aspect, in some implementations of the second aspect, the method further includes: sending second WUR to the terminal device, where the second WUR indicates the terminal device to receive a paging message by using the main communication module.

With reference to the second aspect, in some implementations of the second aspect, the method further includes: sending downlink control information DCI to the terminal device, where the DCI includes scheduling information of a paging message, and the paging message is used to page the terminal device.

With reference to the second aspect, in some implementations of the second aspect, the method further includes: sending first configuration information to the terminal device, where the first configuration information is used to configure the first WUR and/or the second WUR, the first configuration information includes fifth information, and the fifth information indicates that the first WUR is used for measurement and/or the second WUR is used for wake-up.

For example, an RRC release message or an RRC reconfiguration message indicates that the first state needs to be selected as the idle state or the inactive state when the terminal device switches from the second state to the first state.

With reference to the second aspect, in some implementations of the second aspect, the method further includes: receiving seventh information from the terminal device, where the seventh information indicates that the terminal device does not listen to or update system information or stops listening to or updating system information when the main communication module is in the second state.

It should be understood that, for beneficial effects of the second aspect and the implementations of the second aspect, refer to those of the first aspect and the implementations of the first aspect.

According to a third aspect, a communication apparatus is provided. The apparatus may be a terminal device, or may be a chip or a circuit configured in the terminal device. This is not limited in this application.

The apparatus includes: a processing unit, configured to obtain first information, where the first information is used to change a state of a main communication module of the terminal device, and the terminal device includes the main communication module and a secondary communication module, where the processing unit is further configured to switch the main communication module from a first state to a second state based on the first information, where the first state includes: the main communication module is in an idle state, an inactive state, and a connected state.

With reference to the third aspect, in some implementations of the third aspect, the first information includes a first condition, the first condition is used to evaluate quality of a first service area of the terminal device, and the first service area is a service area of the terminal device when the main communication module is in the first state; and the switching the main communication module from a first state to a second state based on the first information includes: when the quality of the first service area meets the first condition, switching the main communication module from the first state to the second state.

For example, the first condition includes at least one of the following: a variation of the quality of the first service area within a first time threshold is less than a first variation threshold, where the first time threshold is greater than a time threshold in a low mobility criterion, or the first variation threshold is less than a variation threshold in a low mobility criterion; the quality of the first service area is greater than a first quality threshold, where the first quality threshold is greater than a threshold in a cell center criterion; and the quality of the first service area is greater than a second quality threshold, where the second quality threshold is greater than a threshold in an S criterion.

Optionally, when the quality of the first service area meets the first condition, the terminal device stops performing measurement on a high-priority frequency.

With reference to the third aspect, in some implementations of the third aspect, the apparatus further includes: a transceiver unit, configured to send second information to a network device, where the second information is used to request to change the state of the main communication module or indicates that the state of the main communication module changes.

Optionally, the second information is carried in a message 3 in a random access procedure.

With reference to the third aspect, in some implementations of the third aspect, the transceiver unit is further configured to receive third information from the network device, where the third information indicates that the network device allows the terminal device to switch the main communication module from the first state to the second state.

For example, the third information is carried in a radio resource control RRC release message, an RRC connection reject message, or an RRC reconfiguration message.

With reference to the third aspect, in some implementations of the third aspect, the first information indicates to switch the main communication module from the first state to the second state.

For example, the first information is carried in a radio resource control RRC release message or an RRC connection reject message.

With reference to the third aspect, in some implementations of the third aspect, the transceiver unit is further configured to send a measurement result of a first service area to a network device, where the first service area is a service area of the terminal device when the main communication module is in the first state.

With reference to the third aspect, in some implementations of the third aspect, the transceiver unit is further configured to send fourth information to the network device, where the fourth information indicates that the terminal device tends to enter the idle state when exiting the connected state, or tends to enter the inactive state when exiting the connected state, or tends to enter the second state when exiting the connected state.

With reference to the third aspect, in some implementations of the third aspect, the transceiver unit is further configured to receive first wake-up radio WUR by using the secondary communication module, where the first WUR is used to determine quality of a second service area of the terminal device, and the second service area is a service area of the terminal device when the main communication module is in the second state; and the processing unit is further configured to: when the quality of the second service area does not meet a second condition, switch the main communication module from the second state to the first state.

For example, the second condition includes at least one of the following: a variation of the quality of the second service area within a second time threshold is less than a second variation threshold, where the second time threshold is greater than a time threshold in a low mobility criterion, or the second variation threshold is less than a variation threshold in a low mobility criterion; the quality of the second service area is greater than a third quality threshold, where the third quality threshold is greater than a threshold in a cell center criterion; and the quality of the second service area is greater than a fourth quality threshold, where the fourth quality threshold is greater than a threshold in an S criterion.

Optionally, the transceiver unit is further configured to receive the second condition from the network device.

With reference to the third aspect, in some implementations of the third aspect, the transceiver unit is further configured to send sixth information to the network device, where the sixth information indicates that the state of the main communication module changes.

Specifically, the sixth information may be carried in a message 3 in a random access procedure.

For example, the sixth information is an identifier of the terminal device when the main communication module is in the second state or an identifier of the terminal device corresponding to the secondary communication module when the main communication module is in the second state.

With reference to the third aspect, in some implementations of the third aspect, the transceiver unit is further configured to listen to second WUR by using the secondary communication module, where the second WUR indicates the terminal device to receive a paging message by using the main communication module; and the processing unit is further configured to switch the main communication module from the second state to the first state when the second WUR is detected through listening.

With reference to the third aspect, in some implementations of the third aspect, the transceiver unit is further configured to receive first configuration information from the network device, where the first configuration information is used to configure the first WUR and/or the second WUR, the first configuration information includes fifth information, and the fifth information indicates that the first WUR is used for measurement and/or the second WUR is used for wake-up.

With reference to the third aspect, in some implementations of the third aspect, when the main communication module switches from the second state to the first state, the processing unit is further configured to switch from the second state to the idle state or the inactive state based on an RRC release message or an RRC reconfiguration message, where the RRC release message or the RRC reconfiguration message indicates that the first state needs to be selected as the idle state or the inactive state when the terminal device switches from the second state to the first state.

Optionally, when the main communication module is in the second state, the terminal device does not listen to or update system information.

With reference to the third aspect, in some implementations of the third aspect, the transceiver unit is further configured to send seventh information to the network device, where the seventh information indicates that the terminal device does not listen to or update the system information or stops listening to or updating the system information when the main communication module is in the second state.

Optionally, after switching the main communication module from the second state to the first state, the processing unit is further configured to perform cell selection and receive the system information in a selected cell.

With reference to the third aspect, in some implementations of the third aspect, when the main communication module is in the first state, the secondary communication module is in a third state or a fourth state, where the third state includes: the secondary communication module is in an on state, a working state, or an active state, and the fourth state includes: the secondary communication module is in an off state, a dormant state, or an inactive state.

It should be understood that, for beneficial effects of the third aspect and the implementations of the third aspect, refer to those of the first aspect and the implementations of the first aspect.

According to a fourth aspect, a communication apparatus is provided. The apparatus may be a network device, or may be a chip or a circuit configured in the network device. This is not limited in this application.

The apparatus includes: a processing unit, configured to determine first information, where the first information is used by a terminal device to switch a main communication module from a first state to a second state, the first state includes: the main communication module is in an idle state, an inactive state, and a connected state, and the terminal device includes the main communication module and a secondary communication module; and a transceiver unit, configured to send the first information to the terminal device.

With reference to the fourth aspect, in some implementations of the fourth aspect, the first information includes a first condition, the first condition is used to evaluate quality of a first service area of the terminal device, the first service area is a service area of the terminal device when the main communication module is in the first state, and the first condition includes at least one of the following: a variation of the quality of the first service area within a first time threshold is less than a first variation threshold, where the first time threshold is greater than a time threshold in a low mobility criterion, or the first variation threshold is less than a variation threshold in a low mobility criterion; the quality of the first service area is greater than a first quality threshold, where the first quality threshold is greater than a threshold in a cell center criterion; and the quality of the first service area is greater than a second quality threshold, where the second quality threshold is greater than a threshold in an S criterion.

With reference to the fourth aspect, in some implementations of the fourth aspect, the transceiver unit is further configured to receive second information from the terminal device, where the second information is used to request to change the state of the main communication module or indicates that the state of the main communication module changes.

For example, the second information is carried in a message 3 in a random access procedure.

With reference to the fourth aspect, in some implementations of the fourth aspect, the transceiver unit is further configured to send third information to the terminal device, where the third information indicates that the terminal device is allowed to switch the main communication module from the first state to the second state.

For example, the third information is carried in a radio resource control RRC release message, an RRC connection reject message, or an RRC reconfiguration message.

With reference to the fourth aspect, in some implementations of the fourth aspect, the first information indicates to switch the main communication module from the first state to the second state.

For example, the first information is carried in a radio resource control RRC release message or an RRC connection reject message.

With reference to the fourth aspect, in some implementations of the fourth aspect, the transceiver unit is further configured to receive a measurement result of a first service area from the terminal device, where the first service area is a service area of the terminal device when the main communication module is in the first state; and the transceiver unit is specifically configured to: when the measurement result of the first service area meets a preset condition, send the first information to the terminal device.

With reference to the fourth aspect, in some implementations of the fourth aspect, the transceiver unit is further configured to receive fourth information from the terminal device, where the fourth information indicates that the terminal device tends to enter the idle state when exiting the connected state, or tends to enter the inactive state when exiting the connected state, or tends to enter the second state when exiting the connected state; and the transceiver unit is specifically configured to: when the fourth information indicates that the terminal device tends to enter the second state when exiting the connected state, send the first information to the terminal device.

With reference to the fourth aspect, in some implementations of the fourth aspect, the transceiver unit is further configured to send first wake-up radio WUR to the terminal device, where the first WUR is used to determine quality of a second service area of the terminal device, and the second service area is a service area of the terminal device when the main communication module is in the second state.

With reference to the fourth aspect, in some implementations of the fourth aspect, the transceiver unit is further configured to send a second condition to the terminal device, where the second condition includes at least one of the following: a variation of the quality of the second service area within a second time threshold is less than a second variation threshold, where the second time threshold is greater than a time threshold in a low mobility criterion, or the second variation threshold is less than a variation threshold in a low mobility criterion; the quality of the second service area is greater than a third quality threshold, where the third quality threshold is greater than a threshold in a cell center criterion; and the quality of the second service area is greater than a fourth quality threshold, where the fourth quality threshold is greater than a threshold in an S criterion.

With reference to the fourth aspect, in some implementations of the fourth aspect, the transceiver unit is further configured to send sixth information to the network device, where the sixth information indicates that the state of the main communication module changes.

For example, the sixth information is carried in a message 3 in a random access procedure.

Optionally, the sixth information is an identifier of the terminal device when the main communication module is in the second state or an identifier of the terminal device corresponding to the secondary communication module when the main communication module is in the second state.

With reference to the fourth aspect, in some implementations of the fourth aspect, the transceiver unit is further configured to send second WUR to the terminal device, where the second WUR indicates the terminal device to receive a paging message by using the main communication module.

With reference to the fourth aspect, in some implementations of the fourth aspect, the transceiver unit is further configured to send downlink control information DCI to the terminal device, where the DCI includes scheduling information of a paging message, and the paging message is used to page the terminal device.

With reference to the fourth aspect, in some implementations of the fourth aspect, the transceiver unit is further configured to send first configuration information to the terminal device, where the first configuration information is used to configure the first WUR and/or the second WUR, the first configuration information includes fifth information, and the fifth information indicates that the first WUR is used for measurement and/or the second WUR is used for wake-up.

For example, an RRC release message or an RRC reconfiguration message indicates that the first state needs to be selected as the idle state or the inactive state when the terminal device switches from the second state to the first state.

With reference to the fourth aspect, in some implementations of the fourth aspect, the transceiver unit is further configured to receive seventh information from the terminal device, where the seventh information indicates that the terminal device does not listen to or update system information or stops listening to or updating system information when the main communication module is in the second state.

It should be understood that, for beneficial effects of the fourth aspect and the implementations of the fourth aspect, refer to those of the second aspect and the implementations of the second aspect.

According to a fifth aspect, a communication apparatus is provided, including a processor and a storage medium, where the storage medium stores instructions, and when the instructions are run by the processor, the method according to any one of the first aspect or the possible implementations of the first aspect or the method according to any one of the second aspect or the possible implementations of the second aspect is implemented.

According to a sixth aspect, a communication apparatus is provided, including a processor, where the processor is configured to process data and/or information, so that the method according to any one of the first aspect or the possible implementations of the first aspect or the method according to any one of the second aspect or the possible implementations of the second aspect is implemented. Optionally, the communication apparatus may further include a communication interface. The communication interface is configured to receive data and/or information, and transmit the received data and/or information to the processor. Optionally, the communication interface is further configured to output data and/or information processed by the processor.

According to a seventh aspect, a chip is provided, including a processor, where the processor is configured to run a program or instructions, so that the method according to any one of the first aspect or the possible implementations of the first aspect or the method according to any one of the second aspect or the possible implementations of the second aspect is implemented. Optionally, the chip may further include a memory, and the memory is configured to store the program or the instructions. Optionally, the chip may further include a transceiver.

According to an eighth aspect, a computer-readable storage medium is provided, where the computer-readable storage medium includes instructions, and when the instructions are run by a processor, the method according to any one of the first aspect or the possible implementations of the first aspect or the method according to any one of the second aspect or the possible implementations of the second aspect is implemented.

According to a ninth aspect, a computer program product is provided, where the computer program product includes computer program code or instructions, and when the computer program code or the instructions are run, the method according to any one of the first aspect or the possible implementations of the first aspect or the method according to any one of the second aspect or the possible implementations of the second aspect is implemented.

According to a tenth aspect, a communication method is provided, including the method according to any one of the first aspect or the possible implementations of the first aspect and the method according to any one of the second aspect or the possible implementations of the second aspect.

According to an eleventh aspect, a communication system is provided, including the communication apparatus according to any one of the third aspect or the possible implementations of the third aspect and the communication apparatus according to any one of the fourth aspect or the possible implementations of the fourth aspect.

### BRIEF DESCRIPTION OF DRAWINGS

FIG. 1 is a diagram of a communication system applicable to an embodiment of this application;
FIG. 2 is a diagram of receiving paging by a terminal device;
FIG. 3 is a diagram of a WUS mechanism;
FIG. 4 is a diagram of a structure of a terminal device according to an embodiment of this application;
FIG. 5 is a schematic flowchart of a communication method 200 according to this application;
FIG. 6 is a diagram of a low mobility criterion;
FIG. 7 is a diagram of a cell center criterion;
FIG. 8 is a diagram of information #A according to this application;
FIG. 9 is a schematic flowchart of a communication method 300 according to this application;
FIG. 10 is a schematic flowchart of a communication method 400 according to this application;
FIG. 11 is a block diagram of a communication apparatus according to an embodiment of this application;
FIG. 12 is another block diagram of a communication apparatus according to an embodiment of this application; and
FIG. 13 is another diagram of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communication (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile communications system (universal mobile telecommunications system, UMTS), a worldwide interoperability for microwave access (worldwide interoperability for microwave access, WiMAX) communication system, and a 5th generation (5th Generation, 5G) mobile communication system or new radio (new radio, NR). The 5G mobile communication system may be non-standalone (Non-standalone, NSA) or standalone (Standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, internet of vehicles. Communication manners in an internet of vehicles system are collectively referred to as vehicle-to-X (vehicle-to-X, V2X, where X can represent anything). For example, V2X may include: vehicle-to-vehicle (vehicle-to-vehicle, V2V) communication, vehicle-to-infrastructure (vehicle-to-infrastructure, V2I) communication, vehicle-to-pedestrian communication (vehicle-to-vehicle, V2P), vehicle-to-network (vehicle-to-network, V2N) communication, or the like.

The technical solutions provided in this application may be further applied to a future communication system, for example, a 6th generation (6th Generation, 6G) mobile communication system. This is not limited in this application.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device with a wireless connection function. Currently, some examples of the terminal may be: a mobile phone (mobile phone), a tablet computer (pad), a computer with a wireless transceiver function (such as a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home) (for example, a home appliance such as a television, a smart box, or a game console), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network or a terminal device in a future evolved public land mobile communication network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (Internet of things, IoT) system. IoT is an important part of future information technology development. A main technical feature of IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

In embodiments of this application, the terminal device may alternatively be a vehicle or an entire vehicle, and may implement communication by using internet of vehicles, or may be a component located in the vehicle (for example, placed in the vehicle or installed in the vehicle), that is, an on-board terminal device, an on-board module, or an on-board unit (on-board unit, OBU).

In addition, the terminal device may alternatively include a sensor such as an intelligent printer, a train detector, or a gas station, and main functions include: collecting data (for some terminal devices), receiving control information and downlink data of a network device, sending an electromagnetic wave, and transmitting uplink data to the network device.

In embodiments of this application, a network device may be any device having a wireless transceiver function. The device includes, but is not limited to: an evolved NodeB (Evolved NodeB, eNB), a radio network controller (Radio network controller, RNC), a NodeB (NodeB, NB), a base station controller (Base station controller, BSC), a base transceiver station (Base transceiver station, BTS), a home base station (for example, home evolved NodeB, or home NodeB, HNB), a baseband unit (Baseband unit, BBU), an access point (Access point, AP), a wireless relay node, a wireless backhaul node, a transmission point (Transmission point, TP) in a wireless fidelity (Wireless fidelity, Wi-Fi) system, or a transmission and reception point (Transmission and reception point, TRP), or the like. Alternatively, the device may be a gNB or a transmission point (Transmission point, TRP or TP) in a 5G (for example, NR) system, one or one group of antenna panels (including a plurality of antenna panels) in a 5G base station; or it may be a network node that constitutes a gNB or a transmission point, for example, a baseband unit (Baseband unit, BBU), or a distributed unit (Distributed unit, DU), or a base station in a next-generation 6G communication system.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. The information at the RRC layer is finally changed into the information at the PHY layer, or is changed from the information at the PHY layer. Therefore, in this architecture, the higher layer signaling such as the RRC layer signaling may also be considered to be sent by the DU, or by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource allocated by the network device (for example, a frequency domain resource, or a spectrum resource) to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

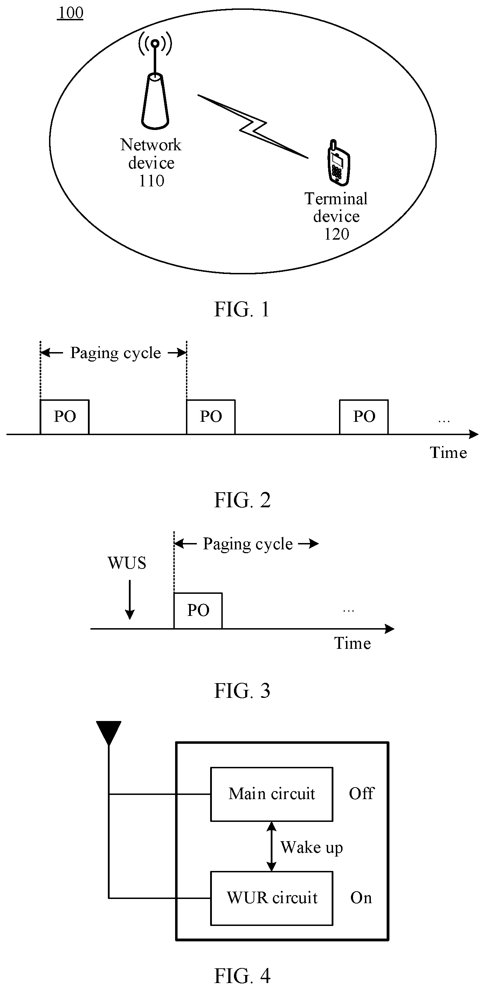

FIG. 1 is a diagram of a communication system 100 applicable to a communication method according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. For each communication device in the communication system, the plurality of configured antennas may include at least one sending antenna configured to send a signal and at least one receiving antenna configured to receive a signal. Therefore, the communication devices in the communication system, for example, the network device 110 and the terminal device 120, may communicate with each other by using a multi-antenna technology.

It should be understood that FIG. 1 is merely a simplified diagram used as an example for case of understanding. The communication system may further include another network device or another terminal device that is not shown in FIG. 1.

For ease of understanding the solutions in embodiments of this application, related concepts are explained.

### 1. State of a terminal device:

In NR, a terminal device has three states: a radio resource control idle (radio resource control idle, RRC_idle) state (state), a radio resource control inactive (radio resource control inactive, RRC_inactive) state, and a radio resource control connected (radio resource control connected, RRC_connected) state. The following briefly describes the three states.
(1) The RRC_idle state may also be referred to as an idle state or an RRC idle state. When the terminal device is in the idle state, an air interface connection between the terminal device and a network device is disconnected, and the network device no longer stores context information of the terminal device. The terminal device may receive broadcast information sent by the network device.
(2) The RRC_inactive state may also be referred to as an inactive state or an RRC inactive state. When the terminal device is in the inactive state, an air interface connection between the terminal device and a network device is disconnected, but the network device continues to store context information of the terminal device. When the terminal device enters the connected state from the inactive state, the terminal device can quickly restore to the connected state based on the context information stored in the network device.
(3) The RRC_connected state may also be referred to as a connected state or an RRC connected state. When the terminal device is in the connected state, an air interface connection is established between the terminal device and a network device, and the terminal device may communicate with the network device based on the air interface connection.

### 2. Paging (paging) mechanism

Paging is used to trigger a terminal device to establish an RRC connection, or notify the terminal device of system information (system information, SI) and warning information. Specifically, the paging may be carried by using a paging message (paging message) and/or a short message (short message). The paging message usually carries an identifier of the terminal device, and the short message may be used to send information such as a system information update indication, an earthquake and tsunami warning system (earthquake and tsunami warning system, EWTS) indication, and a commercial mobile alert system (commercial mobile alert system, CWAS) indication. The paging message is sent to the terminal device through a physical downlink shared channel (physical downlink shared channel, PDSCH). The PDSCH carrying the paging message is scheduled and sent through a physical downlink control channel (physical downlink control channel, PDCCH) scrambled by using a radio network temporary identifier. For example, the radio network temporary identifier may be a paging radio network temporary identifier (paging radio network temporary identifier, P-RNTI). The short message is usually carried and sent through a PDCCH scrambled by using a scrambling code. For example, the scrambling code may be a P-RNTI. Scheduling information of the PDSCH carrying the paging message and the short message may be carried in downlink control information (downlink control information, DCI) of the PDCCH. The DCI may also be referred to as paging DCI, and the scheduling information of the PDSCH carrying the paging message may also be referred to as scheduling information of the paging message.

A terminal device in an idle state or an inactive state listens to a paging occasion (paging occasion, PO) in each paging cycle (paging cycle), to determine whether a network device performs paging. When the terminal device is in the idle state or the inactive state, the terminal device periodically listens to the paging message, and determines whether the paging message includes the terminal device identifier of the terminal device. If yes, the terminal device performs a related operation, for example, performs an RRC connection setup process; for another example, returns from the inactive state to the idle state. Otherwise, the terminal device continues to periodically listen to a subsequent paging message. The listening cycle is usually referred to as a paging cycle, or a paging discontinuous reception (discontinuous reception, DRX) cycle (cycle).

FIG. 2 is a diagram of receiving paging by a terminal device. As shown in FIG. 2, a terminal device listens to a PO based on a paging cycle. At the 1^{st} PO, the terminal device does not detect, through listening, a PDCCH scrambled by using a P-RNTI. The terminal device continues to listen to a PO. At the 2^{nd} PO, the terminal device detects, through listening, a PDCCH scrambled by using a P-RNTI, and the terminal device obtains a short message carried on the PDCCH and/or a paging message scheduled through the PDCCH, that is, scheduling information of a PDSCH of a paging message.

The terminal device calculates a PO location based on terminal device identification information of the terminal device and a paging-related parameter according to a calculation formula specified in a protocol. PO locations calculated by different terminal devices may be the same or may be different. In other words, a plurality of terminal devices may listen to a same PO.

A basic paging procedure is as follows:
Step 1: A network device selects a specific paging range, and sends paging DCI in a PO.

The paging range is an area in which the network device sends paging, and the area is determined by the network device. For example, for a terminal device in an idle state, the network device may use a tracking area (tracking area, TA) to which the terminal device belongs as the paging range. For another example, for a terminal device in an inactive state, the network device may use a radio access network notification area (RAN notification area) to which the terminal device belongs as the paging range.

The paging DCI may include scheduling information of a paging message, a short message, and/or the like, and the scheduling information of the paging message includes a frequency domain resource location of the paging message and/or a time domain resource location of the paging message. Specific content is shown in Table 1.

**Table 1**

| Bit field (bit field) | Size and description |
|---|---|
| Short message indicator | [2 bits], indicating a content type in the paging DCI: |
| (Short message indicator) | "01" indicates that only the scheduling information of the paging message is present; |
| | "10" indicates that only the short message is present; |
| | "11" indicates that both the scheduling information of the paging message and the short message are present; and |
| | "00" indicates reserved (reserved) bits (that is, this value is not used temporarily). |
| Short message (Short message) | [8 bits], indicating a system information update indication, an earthquake and tsunami warning system indication, and a commercial mobile alert system indication |
| Frequency domain resource assignment | [Determine a size based on a related parameter], indicating the frequency domain resource location of the paging message |
| (Frequency domain resource assignment) | |
| Time domain resource assignment | [4 bits], indicating the time domain resource location of the paging message |
| (Time domain resource assignment) | |
| Others | [(1+5+2) bits], indicating other scheduling information |
| Reserved | [6 bits], indicating reserved bits |

Step 2: After receiving the paging DCI sent by the network, the terminal device determines a subsequent operation based on the content of the paging DCI.

Specifically, if the paging DCI includes the scheduling information of the paging message, the terminal device receives and decodes the paging message on the PDSCH based on the scheduling information, and then determines the subsequent operation based on the content of the paging message. The paging message includes terminal device identification information of one or more terminal devices paged by the network device and/or access type information of a paged terminal device. The terminal device identification information may be a user identifier allocated by a core network, for example, a 5G temporary mobile subscription identifier (5G S-temporary mobile subscription identifier, 5G-S-TMSI), or may be a context identifier of an RRC inactive state terminal device allocated by a RAN, for example, an inactive radio network temporary identifier (inactive-radio network temporary identifier, I-RNTI).

After decoding the paging message, the terminal device determines whether the paging message includes the terminal device identifier of the terminal device. If the paging message does not include the terminal device identifier of the terminal device, the terminal device ignores the paging message. If the paging message includes the terminal device identifier of the terminal device, the terminal device determines a subsequent operation based on other content in the paging message. Specifically, if the paging DCI includes only the short message, the terminal device receives at least one of the updated system information, the earthquake and tsunami warning system indication, and the commercial mobile alert system indication according to the indication of the short message. If the paging DCI includes only the scheduling information of the paging message, the terminal device receives the paging message based on the indicated frequency domain resource location of the paging message and/or the indicated time domain resource location of the paging message. If the paging DCI includes the scheduling information of the paging message and the short message, the terminal device separately receives the paging message and at least one of the updated system information, the earthquake and tsunami warning system indication, and the commercial mobile alert system indication.

According to different network elements that trigger paging, paging may be classified into core network (core network, CN) paging triggered by a CN and RAN paging triggered by a RAN. A core network device may initiate CN paging to a terminal device in an idle state or an inactive state, and the RAN may initiate RAN paging to a terminal device in an inactive state.

The terminal device in the idle state needs to listen to CN paging. Specifically, when receiving and decoding the paging message, the terminal device verifies whether the terminal device identification information in the paging message matches the 5G-S-TMSI of the terminal device. If yes, the terminal device initiates an RRC connection setup (RRC setup) process.

The terminal device in the inactive state needs to listen to CN paging and RAN paging. Specifically, when receiving and decoding the paging message, the terminal device verifies whether the terminal device identification information in the paging message matches the 5G-S-TMSI or the I-RNTI of the terminal device. If the 5G-S-TMSI is matched, the terminal device first enters an RRC idle state, and then initiates an RRC connection setup process. If the I-RNTI is matched, the terminal device initiates an RRC connection resume (RRC resume) process.

### 3. Wake-up signal (wake-up signal, WUS) mechanism

A power saving signal (power saving signal) is a signal introduced to achieve a power saving purpose of a terminal device, and the WUS is a type of power saving signal. There may be a plurality of types of WUSs, including DCI, a physical layer signal (signal)/sequence (sequence), a medium access control control element (medium access control control element, MAC CE), RRC signaling, and the like.

FIG. 3 is a diagram of a WUS mechanism. As shown in FIG. 3, for a paging process, a network may send a WUS before a PO or on the PO, to indicate whether a terminal device needs to listen to the PO or receive a paging message subsequently, so as to avoid unnecessary paging reception by the terminal device, thereby saving power of the terminal device.

Currently, the 3rd generation partnership project (3rd generation partnership project, 3GPP) release (release, R) 18 is studying to introduce a wake-up radio (wake-up radio, WUR) mechanism to further reduce power consumption of the terminal device. As shown in FIG. 4, in the WUR mechanism, the terminal device includes a WUR circuit and a main circuit. The WUR is a signal, and may include a sequence. The WUR may also be referred to as a WUR sequence or a WUR signal.

FIG. 4 is a diagram of a structure of a terminal device according to an embodiment of this application. The WUR circuit may also be referred to as a WUR receiver, a WUR communication machine, a secondary communication machine, a wake-up receiver, a WUR-dedicated receiver, a low power communication machine, an ultra-low power communication machine, an ultra-low power receiver, an ultra-low power module, a secondary communication module, or the like. The main circuit is also referred to as a main receiver, a main communication machine, a main modem (modem), a main communication module, a main circuit, or the like. In FIG. 4, the WUR circuit is in an on state, the main circuit is in an off state, and the WUR circuit may be configured to listen to a wake-up signal or wake-up data when the main circuit is in an off state. If the WUR circuit receives the WUR, the WUR circuit wakes up the main circuit, and the main circuit may further complete receiving and sending of data and signaling. If the WUR circuit does not receive the WUR, the main circuit continues to keep in the off state, so that power consumption of the terminal device can be reduced.

After the WUR mechanism is introduced, if the main circuit is frequently woken up, it is difficult for the terminal device to achieve a good power saving effect. For example, in a current 3GPP communication system, a terminal device in an idle state or an inactive state performs radio resource management (radio resource management, RRM) measurement for a serving cell and/or a neighboring cell, and may further determine, based on a measurement result of the serving cell and/or the neighboring cell, whether to perform cell reselection. After the WUR mechanism is introduced, when the main circuit of the terminal device is in an off state and the WUR circuit is in an on state, if the terminal device still performs RRM measurement in an idle state and/or an inactive state, the main circuit of the terminal device is frequently woken up based on an RRM measurement requirement. Consequently, it is still difficult for the terminal device to achieve a good power saving effect.

In view of this, this application provides a communication method and a communication apparatus, to control state switching of a main circuit of a terminal device, so that a quantity of times of waking up the main circuit can be reduced, thereby helping save power of the terminal device.

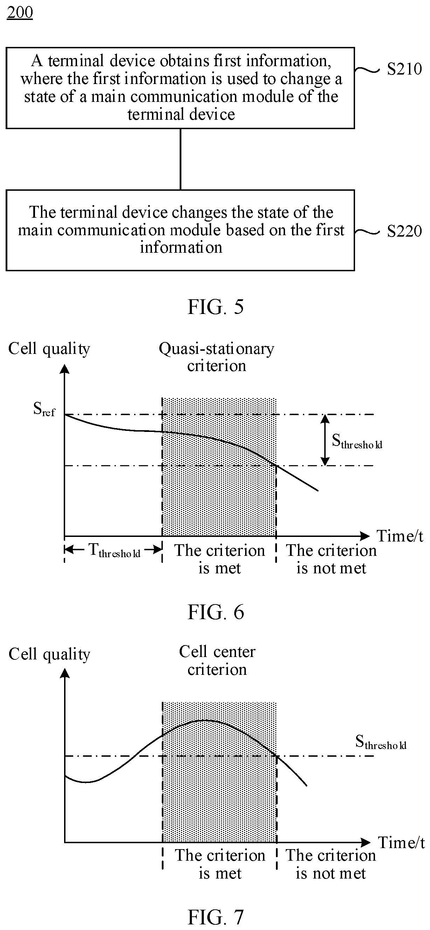

FIG. 5 is a schematic flowchart of a communication method 200 according to this application. As shown in FIG. 5, the method may include the following steps.

S210: A terminal device obtains first information.

The terminal device includes a main communication module and a secondary communication module, and the first information is used to change a state of the main communication module of the terminal device. Specifically, the state of the main communication module includes a first state and a second state.

Specifically, the first state includes: the main communication module is in an idle state, an inactive state, and a connected state. In other words, being in the idle state, the inactive state, and the connected state is a case in which the main communication module is in the first state. That the main communication module is in an idle state, an inactive state, or a connected state may also be referred to as that the terminal device is in an idle state, an inactive state, or a connected state. Steps performed by the terminal device in the idle state, the inactive state, or the connected state may be understood as steps performed by the main communication module in the first state.

The first state may be referred to as an on state, a started state, a working state, an enabled state, an active state, an awake state, or the like. In other words, when the main communication module is in the first state, the terminal device listens to a synchronization signal, receives DCI, listens to paging, and/or the like. The second state may be referred to as an off state, a dormant state, a sleep state, a deep sleep state, a low power state, a disabled state, an inactive state, or the like. In other words, when the main communication module is in the second state, the terminal device does not listen to a synchronization signal, does not receive DCI, does not listen to paging, or the like. The synchronization signal may be located in a synchronization signal/physical broadcast channel block (synchronization signal/physical broadcast channel block, SSB).

Similar to the main communication module, a state of the secondary communication module includes a third state and a fourth state.

Specifically, the third state may be referred to as an on state, a started state, a working state, an enabled state, an active state, an awake state, or the like. In other words, when the secondary communication module is in the third state, the terminal device listens to a power saving signal such as a wake-up radio (wake up radio, WUR) signal. The fourth state may be referred to as an off state, a dormant state, a sleep state, a deep sleep state, a low power state, a disabled state, an inactive state, or the like. In other words, when the secondary communication module is in the fourth state, the terminal device does not listen to a power saving signal such as a WUR signal.

When the main communication module is in the first state, the secondary communication module may be in the third state, or may be in the fourth state. When the main communication module is in the second state, the secondary communication module may be in the third state, or may be in the fourth state. In other words, in this application, the state of the terminal device may include the following several cases:
Case 1: The main communication module is in an on state and the secondary communication module is in an on state.
Case 2: The main communication module is in an on state and the secondary communication module is in an off state.
Case 3: The main communication module is in an off state and the secondary communication module is in an on state.
Case 4: The main communication module is in an off state and the secondary communication module is in an off state.

Optionally, in this application, a case in which the main communication module is in the second state and the secondary communication module is in the first state may be referred to as a WUR mode. In the WUR mode, the main communication module of the terminal device no longer listens to or receives a conventional wake-up signal (for example, PDCCH signaling with a wake-up function, or a signal or a sequence with a wake-up function).

The first information is used to change the state of the main communication module of the terminal device. In other words, the terminal device may change the state of the main communication module based on the first information.

Optionally, the first information may be further used to change the state of the secondary communication module of the terminal device. For example, the terminal device switches the main communication module from the first state to the second state, and switches the secondary communication module from the fourth state to the third state based on the first information.

Optionally, the first information may not be used to change the state of the secondary communication module of the terminal device. For example, regardless of how the state of the main communication module changes, the secondary communication module is in the third state. In this case, the terminal device needs to change only the state of the main communication module based on the first information. In this case, the main communication module is in the first state, that is, the terminal device is in the first state, and the main communication module is in the second state, that is, the terminal device is in the second state.

That a terminal device obtains first information includes: The terminal device reads preconfigured first information, or the terminal device receives first information from a network device.

S220: The terminal device changes the state of the main communication module based on the first information.

For example, the main communication module is originally in the first state, and the terminal device switches the main communication module from the first state to the second state based on the first information. For another example, the main communication module is originally in the second state, and the terminal device switches the main communication module from the second state to the first state based on the first information.

The first information may be a condition, and the terminal device may determine, based on whether the condition is met, whether to change the state of the main communication module. The first information may alternatively be indication information. For example, if the first information indicates the terminal device to change the state of the main communication module, the terminal device may change the state of the main communication module according to the indication.

Optionally, in this application, that the main communication module switches from the first state to the second state may also be referred to as that the terminal device enters the WUR mode, including: the terminal device enters the WUR mode from the idle state, or the terminal device enters the WUR mode from the inactive state, or the terminal device enters the WUR mode from the connected state. That the main communication module switches from the second state to the first state may also be referred to as that the terminal device exits the WUR mode, including: the terminal device enters the idle state after exiting the WUR mode, or the terminal device enters the inactive state after exiting the WUR mode, or the terminal device enters the connected state after exiting the WUR mode.

Based on the foregoing solution, the terminal device can adjust the state of the main communication module based on the first information, that is, can control state switching of the main communication module, which helps save power of the terminal device.

In an implementation scenario of the foregoing embodiment, the first information is a first condition, the first condition is used to evaluate quality of a first service area of the terminal device, the first service area is a service area of the terminal device when the main communication module is in the first state, and the terminal device switches the main communication module from the second state to the first state when the first condition is met.

The first condition may be that a variation of the quality of the first service area within a first time threshold is less than or equal to a first variation threshold, where the first time threshold is greater than or equal to a time threshold in a low mobility criterion, or the first variation threshold is less than or equal to a variation threshold in a low mobility criterion.

Specifically, the low mobility criterion is also referred to as a stationary criterion or a quasi-stationary criterion (stationary criterion), and is collectively referred to as a low mobility criterion in this application for description.

FIG. 6 is a diagram of a low mobility criterion. As shown in FIG. 6, a basic principle of the low mobility criterion is to evaluate whether a variation of quality of a service area of a terminal device within a specific time (Tthreshold) is less than (or less than or equal to) a given threshold (LSthreshold). If the variation of the quality of the service area of the terminal device within the specific time (Tthreshold) is less than (or less than or equal to) the given threshold (LSthreshold), the low mobility criterion is met. The low mobility criterion may be used when the terminal device is in an idle state, an inactive state, or a connected state, and optionally, may be used as a determining condition for entering a WUR mode.

It should be understood that, in FIG. 6, Sthreshold represents a threshold, a value of Sthreshold may be equal to LSthreshold, and Sref represents a cell quality reference value.

Specifically, when the variation of the quality of the serving cell or the service area of the terminal device within the specific time Tthreshold is less than (or less than or equal to) the threshold LSthreshold, the terminal device determines that the terminal device may enter the WUR mode from the idle state or the inactive state, or the terminal device directly enters the WUR mode when determining that the terminal device may exit the connected state. Alternatively, when the variation of the quality of the serving cell or the service area of the terminal device within the specific time Tthreshold is greater than (or greater than or equal to) the threshold LSthreshold, the terminal device determines that the terminal device should not enter the WUR mode from the idle state or the inactive state, or the terminal device directly enters the WUR mode when determining that the terminal device should not exit the connected state.

As a further enhancement, the low mobility criterion may be enhanced to be more applicable to the WUR mode. For example, the foregoing enhancement may be introducing a second threshold LSthreshold_e (an example of the first variation threshold), where the threshold LSthreshold_e may be a smaller value than LSthreshold. Alternatively, the enhancement may be introducing a second threshold Tthreshold-e (an example of the first time threshold), where the threshold Tthreshold-e may have a larger value than Tthreshold, which is referred to as an enhanced low mobility criterion for short.

Specifically, when the variation of the quality of the serving cell or the service area of the terminal device within the specific time Tthreshold or Tthreshold-e is less than (or less than or equal to) the second threshold LSthreshold-e, the terminal device determines that the terminal device may enter the WUR mode from the idle state or the inactive state, or the terminal device directly enters the WUR mode when determining that the terminal device may exit the connected state. When the variation of the quality of the serving cell or the service area of the terminal device within the specific time Tthreshold or Tthreshold-e is greater than (or greater than or equal to) the second threshold LSthreshold-e, the terminal device determines that the terminal device should not enter the WUR mode from the idle state or the inactive state, or the terminal device directly enters the WUR mode when determining that the terminal device should not exit the connected state.

The first condition may alternatively be that the quality of the first service area is greater than or equal to a first quality threshold, where the first quality threshold is greater than or equal to a threshold in a cell center criterion.

Specifically, the cell center criterion may also be referred to as a not-cell-edge criterion, and this application is described in a cell center criterion manner.

FIG. 7 is a diagram of a cell center criterion. As shown in FIG. 7, a basic principle of the cell center criterion is to evaluate whether quality of a service area of a terminal device is greater than a given threshold (CSthreshold). If the quality of the service area of the terminal device is greater than the given threshold (CSthreshold), the not-cell-edge criterion is met. The not-cell-edge criterion may be applied to an idle state, an inactive state, and a connected state, and optionally, may be used as a determining condition for the terminal device to enter or exit a WUR mode.

It should be understood that, in FIG. 7, Sthreshold represents a threshold, and a value of Sthreshold may be equal to CSthreshold.

Specifically, when the quality of the serving cell or the service area of the terminal device is greater than (or greater than or equal to) the threshold CSthreshold, the terminal device determines that the terminal device may enter the WUR mode from the idle state or the inactive state, or the terminal device directly enters the WUR mode when determining that the terminal device may exit the connected state. When the quality of the serving cell or the service area of the terminal device is less than (or less than or equal to) the threshold CSthreshold, the terminal device determines that the terminal device should not enter the WUR mode from the idle state or the inactive state, or the terminal device directly enters the WUR mode when determining that the terminal device should not exit the connected state.

Alternatively, the foregoing criterion may be further enhanced. For example, a second threshold CSthreshold-e (an example of the first quality threshold) is introduced, the second threshold CSthreshold-e is greater than CSthreshold, and CSthreshold-e is used to determine whether the terminal device enters or exits the WUR mode, which may be referred to as an enhanced low mobility criterion for short.

Specifically, when the quality of the serving cell or the service area of the terminal device is greater than (or greater than or equal to) the second threshold CSthreshold-e, the terminal device determines that the terminal device may enter the WUR mode from the idle state or the inactive state, or the terminal device directly enters the WUR mode when determining that the terminal device may exit the connected state. When the quality of the serving cell or the service area of the terminal device is less than (or less than or equal to) the second threshold CSthreshold-e, the terminal device determines that the terminal device should not enter the WUR mode from the idle state or the inactive state, or the terminal device directly enters the WUR mode when determining that the terminal device should not exit the connected state.

The first condition may alternatively be that the quality of the first service area is greater than a second quality threshold, where the second quality threshold is greater than or equal to a threshold in an S criterion.

The S criterion means that when quality of a serving cell or a service area of the terminal device is greater than a threshold SSthreshold, the terminal device no longer needs to measure an inter-frequency or inter-RAT neighboring cell, but the terminal device needs to measure a cell of a high-priority frequency.

For the terminal device that supports a WUR mode, when determining that the criterion S is met, the terminal device may determine to enter the WUR mode or determine that a condition for entering the WUR mode is met.

As an enhancement of the S criterion, a second threshold SSthreshold-e (an example of the second quality threshold) may be introduced, where the threshold SSthreshold-e is different from SSthreshold, for example, the second threshold SSthreshold-e is greater than SSthreshold. The UE may determine, based on the second threshold SSthreshold-e, whether to enter the WUR mode, or determine whether the condition for entering the WUR mode is met.

The foregoing description is a description of a single criterion or condition item of the terminal device. To be specific, the terminal device determines, based on the single criterion, whether the terminal device can enter the WUR mode from an idle state or an inactive state, or determines whether the terminal device can directly enter the WUR mode when exiting from a connected state. Optionally, the terminal device may determine, with reference to a plurality of criterion items in the foregoing criterion based on the plurality of criterion items, whether the terminal device can enter the WUR mode from an idle state, an inactive state, or a connected state. For example, only when the terminal device determines that both the enhanced low mobility criterion and the enhanced cell center criterion are met, the terminal device can determine that the terminal device can enter the WUR mode from the idle state or the inactive state, or the UE determines that the terminal device should directly enter the WUR mode when exiting from the connected state. In this case, it may be understood that the first condition includes a plurality of conditions.

In addition, the first condition may be understood as a determining condition for entering the WUR mode. Meeting the first condition may be understood as meeting the condition for entering the WUR mode, and not meeting the first condition may be understood as not meeting the condition for entering the WUR mode.

In an implementation, quality of the first service area of the terminal device may be evaluated by the main communication module by measuring reference information such as an SSB or a channel state information-reference signal (channel state information-reference signal, CSI-RS) of a cell.

Based on the foregoing solution, the terminal device can adjust the state of the main communication module based on the first condition, and when the quality of the first service area meets the first condition, the terminal device switches the main communication module from the second state to the first state, thereby helping save power of the terminal device.

In addition, because the terminal device may perform determining by itself, power saving efficiency is higher.

Optionally, when the first condition is met, the terminal device stops performing measurement on a high-priority frequency. In other words, regardless of whether a neighboring cell is a cell of a high-priority frequency, the terminal device switches the main communication module to the second state, and stops measuring the neighboring cell.

Based on the foregoing solution, when the quality of the first service area meets the first condition, the terminal device stops performing measurement on the high-priority frequency, so that power consumption of the terminal device can be reduced to a greater extent.

Optionally, in this implementation scenario, the method 200 further includes: When determining that the foregoing criterion or determining condition is met, the terminal device sends second information to the network device, where the second information is used to request to change the state of the main communication module or indicates that the state of the main communication module changes.

Specifically, when determining that the foregoing criterion or determining condition is met, the terminal device may initiate a random access procedure, to request the network device to enter the WUR mode, or indicate that the terminal device is to enter the WUR mode.

The second information may be carried in a message 3 (Msg 3) in a random access procedure.

Specifically, the terminal device may indicate, in a random access message 3, that an access reason is a WUR mode entry request, or the terminal device adds an identifier of the terminal device in the WUR mode to the sent random access message 3. Optionally, the identifier of the terminal device may alternatively be a WUR sequence or WUR sequence information corresponding to the terminal device. In other words, the terminal device may send the WUR sequence or the WUR sequence information of the terminal device to the network device in the random access message 3. Herein, the WUR sequence information may be an identifier of the WUR sequence.

Further, the terminal device may receive a message 4 (Msg 4) sent by the network device, where the message 4 may include a WUR mode acknowledgment message, and the WUR mode acknowledgment message is a response of the network device to the second information.

Based on the foregoing solution, the terminal device and the network device can align a current state of the terminal device, for example, whether the terminal device is in the idle state, the inactive state, or the WUR mode. In this way, the network device can efficiently use a WUR resource for a specific terminal device.

Optionally, in this implementation scenario, the method 200 further includes: The network device sends third information to the terminal device, and correspondingly, the terminal device receives the third information, where the third information indicates that the network device allows the terminal device to switch the main communication module from the first state to the second state.

In an implementation, that the network device allows the terminal device to switch the main communication module from the first state to the second state may be understood as response information, that is, the network device indicates the terminal device whether to switch the main communication module from the first state to the second state. For example, after the terminal device sends the second information, the network device allows the terminal device to switch the main communication module from the first state to the second state. In this case, the third information may be understood as a response of the network device to the second information.

In another implementation, that the network device allows the terminal device to switch the main communication module from the first state to the second state may also be understood as configuration information, that is, the network device indicates whether the terminal device allows the terminal device to perform switching by itself. The self-switching means that the terminal device does not need to send second information to the network device before switching the main communication module from the first state to the second state, and the terminal device can switch the main communication module from the first state to the second state by itself. For example, before S220, the network device sends third information to the terminal device, where the third information may be understood as indicating that the network device allows autonomously switching the main communication module from the first state to the second state.

Specifically, the third information may be carried in a radio resource control RRC connection release message, an RRC connection reject message, or an RRC reconfiguration message.

For example, if the terminal device is in the connected state, the terminal device may receive the RRC connection release message from the network device. When receiving the RRC connection release message, the terminal device may determine, according to an indication in the RRC connection release message, whether to enter the idle state or the inactive state. For example, the RRC connection release message indicates the terminal device to enter the idle state. After receiving the RRC connection release message, the terminal device may first enter the idle state, and then further determine whether the condition for entering the WUR mode is met. If the condition is met, the terminal device determines to enter the WUR mode from the idle state. Alternatively, when receiving the RRC connection release message, the terminal device may not enter the idle state or the inactive state, but performs condition determining. If the condition for entering the WUR mode is met, the terminal device determines that the terminal device can enter the WUR mode. The RRC connection release message may carry the third information. The RRC connection release message may also be referred to as an RRC release message.

For another example, if the terminal device is in the idle state or the inactive state, the terminal device may perform an RRC connection setup process with the network device. In the process, the terminal device may receive the RRC reject message or the RRC reconfiguration message from the network device. The RRC reject message indicates, to the terminal device, that the network device rejects the RRC connection setup, and the RRC reconfiguration message is used to provide configuration information for the terminal device. The RRC reject message or the RRC reconfiguration message may carry the third information.

In another implementation scenario of the foregoing embodiment, the first information indicates to switch the main communication module from the first state to the second state.

For example, if the terminal device is in the connected state, the terminal device may receive the RRC connection release message from the network device. The network device may indicate, in the RRC connection release message, the terminal device to enter the idle state, the inactive state, or the WUR mode. When receiving the RRC connection release message, the terminal device may determine, based on information indicated in the RRC connection release message, whether to enter the idle state, the inactive state, or the WUR mode.

For another example, in a process in which the terminal device establishes an RRC connection to the network device, the terminal device may receive the RRC reject message from the network device, and the network device may indicate, in the RRC reject message, the terminal device whether to enter the WUR mode.

Optionally, in this implementation scenario, the method 200 further includes: The terminal device sends a measurement result of a first service area to a network device, and correspondingly, the network device receives the measurement result of the first service area, where the first service area is a service area of the terminal device when the main communication module is in the first state.

For example, before S220, the measurement result of the first service area may be sent to the network device by using an RRC connection establishment request message.

In an implementation, quality of the first service area of the terminal device may be evaluated by the main communication module by measuring reference information such as an SSB or a CSI-RS of a cell.

The measurement result of the first service area may also be understood as the quality of the first service area.

Optionally, in this implementation scenario, the method 200 further includes: The network device determines the first information based on the measurement result of the first service area. For example, when the measurement result of the first service area meets a preset condition, the network device sends the first information to the terminal device. When the measurement result of the first service area does not meet the preset condition, the network device does not send the first information to the terminal device.

Specifically, the network device also maintains a preset condition. The preset condition may be a first condition. When the measurement result of the first service area meets the first condition, the network device may indicate the terminal device to directly enter the WUR mode from the connected state.

Based on the foregoing solution, the network device can control the terminal device to adjust the state of the main communication module, and when the quality of the first service area meets the first condition, the network device can indicate the terminal device to switch the main communication module from the second state to the first state, thereby helping save power of the terminal device.

In addition, in this manner, the terminal device can be prevented from aligning the state of the terminal device with the network device by using additional signaling, thereby reducing signaling overheads.

Optionally, in any one of the foregoing implementation scenarios, the method 200 further includes: The terminal device sends fourth information to the network device, and correspondingly, the network device receives the fourth information from the terminal device, where the fourth information indicates that the terminal device tends to enter the idle state when exiting the connected state, or tends to enter the inactive state when exiting the connected state, or tends to enter the second state when exiting the connected state.

For example, when the terminal device is in the connected state, or in a process in which the terminal device establishes an RRC connection, the terminal device may send, in an uplink message, tendency information of the terminal device to the network. The tendency information may include: the terminal device tends to enter the idle state when exiting from the connected state, or the terminal device tends to enter an inactive state when exiting from the connected state, or the terminal device tends to enter the WUR mode when exiting from the connected state.

Optionally, in this implementation scenario, the method 200 further includes: The network device determines the first information based on the fourth information.

For example, if the tendency information reported by the terminal device indicates that the terminal device tends to preferentially enter the WUR mode when exiting the connected state, the network device may indicate, based on the tendency information reported by the terminal device and in the RRC connection release indication, the terminal device to enter the WUR mode when exiting the connected state.

Optionally, in any one of the foregoing implementation scenarios, an RRC connection release message or an RRC reconfiguration message may further indicate that the first state needs to be selected as the idle state or the inactive state when the terminal device switches from the second state to the first state.

Optionally, in this implementation scenario, the method 200 further includes: When the terminal device exits the WUR mode, the terminal device switches from the second state to the idle state or to the inactive state based on the RRC connection release message or the RRC reconfiguration message.

In still another implementation scenario of the foregoing embodiment, the first information is a second condition, the second condition is used to evaluate quality of a second service area of the terminal device, and the second service area is a service area of the terminal device when the main communication module is in the second state. When the quality of the second service area does not meet the second condition, the main communication module is switched from the second state to the first state. In other words, when the quality of the second service area meets the second condition, the state of the main communication module is not changed, that is, the main communication module is kept in the second state.

The second condition may be that a variation of the quality of the second service area within a second time threshold is less than or equal to a second variation threshold, where the second time threshold is greater than or equal to a time threshold in a low mobility criterion, or the second variation threshold is less than or equal to a variation threshold in a low mobility criterion.

For example, if the terminal device detects that a variation of quality of a serving cell or a service area within a specific time Tthreshold is greater than (or greater than or equal to) a third threshold LSthreshold-e2 (an example of the second variation threshold), the terminal device determines that the terminal device should exit the WUR mode. Alternatively, if a variation of quality of a serving cell or a service area of the terminal device within a specific time Tthreshold-e is greater than (or greater than or equal to) a third threshold LSthreshold-e2, the terminal device determines that the terminal device should exit the WUR mode. The third threshold LSthreshold-e2 may be equal to the second threshold LSthreshold-e, or the third threshold LSthreshold-e2 may be equal to the threshold LSthreshold. It should be understood that the second time threshold may be another value in addition to being equal to Tthreshold or Tthreshold-e. For example, the second time threshold is Tthreshold-e2, and Tthreshold-e2 is greater than Tthreshold-e. This is not limited in this application.

The second condition may be that the quality of the second service area is greater than or equal to a third quality threshold, where the third quality threshold is greater than or equal to a threshold in a cell center criterion.

For example, if quality of a serving cell or a service area of the terminal device is less than (or less than or equal to) a third threshold CSthreshold-e2 (an example of the third quality threshold), the terminal device determines that the terminal device should exit the WUR mode. Herein, the third threshold CSthreshold-e2 may be equal to the second threshold CSthreshold-e, or may be equal to the threshold CSthreshold, or may be another value. This is not limited in this application.

The second condition may be that the quality of the second service area is greater than or equal to a fourth quality threshold, where the fourth quality threshold is greater than or equal to a threshold in an S criterion.

For example, if quality of a serving cell or a service area of the terminal device is less than (or less than or equal to) a third threshold SSthreshold-e 2 (an example of the fourth quality threshold), the terminal device determines that the terminal device should exit the WUR mode. Herein, the third threshold SSthreshold-e 2 may be equal to the second threshold SSthreshold-e, or may be equal to the threshold SSthreshold, or may be another value. This is not limited in this application.

The foregoing description is a description of a single criterion or condition item of the terminal device. To be specific, the terminal device determines, based on the single criterion, whether the terminal device can exit the WUR mode. Optionally, the terminal device may determine, with reference to a plurality of criterion items in the foregoing criterion based on the plurality of criterion items, whether the terminal device can exit the WUR mode. For example, only when the terminal device determines that neither the enhanced low mobility criterion nor the enhanced cell center criterion is met, the terminal device can determine to exit the WUR mode. In this case, it may be understood that the second condition includes a plurality of conditions.

In addition, the second condition may be understood as a determining condition for exiting the WUR mode. Not meeting the second condition may be understood as meeting the condition for exiting the WUR mode, and meeting the second condition may be understood as not meeting the condition for exiting the WUR mode.

Optionally, a value of the threshold in the second condition may be the same as that in the first condition.

Based on the foregoing solution, when the quality of the second service area meets the second condition, the main communication module of the terminal device may remain in the second state. In this way, a better power saving effect can be achieved. When the quality of the second service area does not meet the second condition, the main communication module of the terminal device may switch to the first state. In this way, it can be ensured that communication performance of the terminal device is not affected.

Optionally, the service area may include one or more cells. The quality of the service area is signal quality or average signal quality of the terminal device in the one or more cells included in the service area.

It should be understood that in this application, the first service area is a service area of the terminal device when the main communication module is in the first state, and the second service area is a service area of the terminal device when the main communication module is in the second state. The first service area includes one or more cells, and the second service area also includes one or more cells. The first service area and the second service area may be the same or may be different.

Specifically, the first service area may be a serving cell and/or a neighboring cell that are/is defined in a current standard and that are/is of the terminal device in an idle state, an inactive state, or a connected state.

Specifically, the second service area may include a plurality of cells (cells), and may be referred to as a WUR area. In a WUR area range, the terminal device has one or more WUR wake-up signals or wake-up sequences. In a WUR area, the terminal device may determine, by detecting WUR signal quality, whether the terminal device is suitable to keep in a WUR mode in the WUR area.

One WUR area may include a plurality of gNB-DUs in one gNB-CU, and a WUR signal or a sequence (second WUR) of one terminal device may be unique in a range of the plurality of gNB-DUs controlled by the gNB-CU. One WUR area may alternatively include a plurality of gNB-CUs. In this case, negotiation control may be performed between the gNB-CU and a neighboring gNB-CU for a WUR signal or sequence of a specific terminal device, to keep the WUR of the terminal device as unique as possible in the area. Alternatively, a CN entity, for example, an access and mobility management function (access and mobility management function, AMF), may manage a plurality of gNB-CUs. The CN entity may control a WUR signal or a sequence of a specific terminal device, so that the terminal device has a WUR signal or sequence as unique as possible in a WUR area including the plurality of gNB-CUs.

In an implementation, the quality of the second service area of the terminal device may be evaluated by the secondary communication module through detection based on WUR. The WUR may be first WUR, and the first WUR is used to determine quality of a service area of the terminal device.

Specifically, in this implementation scenario, the method 200 further includes: The terminal device listens to the first WUR by using the secondary communication module, where the first WUR may be understood as WUR used for measurement.

It should be understood that a WUR sequence may be used for wake-up, or may be used for measurement. For specific UE, if one or more WUR sequences correspond to the UE, the one or more WUR sequences may be used to wake up the specific UE. However, the one or more WUR sequences may also be used by the UE and another UE to perform measurement. Similarly, other WUR sequences are not used to wake up the UE, but the UE may use these other WUR sequences to measure cell quality. In this application, for differentiation, WUR used for measurement is denoted as first WUR, and WUR used for wake-up is denoted as second WUR. The first WUR may be one or more pieces of WUR, and the second WUR may also be one or more pieces of WUR. Optionally, there may be an intersection set between a WUR sequence included in the first WUR and a WUR sequence included in the second WUR.

Optionally, the to-be-measured WUR may be WUR of another terminal device in a network. In other words, the first WUR may include a WUR sequence used to wake up another terminal device in a communication system.

Based on the foregoing solution, the WUR sequence may be not only used to wake up the main communication module of the terminal device, but also used by the secondary communication module of the terminal device to perform cell measurement in the WUR mode, so that the terminal device can obtain more WUR sequences, to obtain a better measurement result. In this way, performance of the terminal device in the WUR mode can be ensured, and a more accurate determining basis can be provided for the terminal device to determine whether to exit the WUR mode.

Optionally, in this implementation scenario, the method 200 further includes: The terminal device sends sixth information to the network device, and correspondingly, the network device receives the sixth information, where the sixth information indicates that the state of the main communication module changes.

Specifically, when the terminal device in the WUR mode determines, based on detection quality of a serving cell or a service area, that the foregoing exit criterion or condition is met, the terminal device determines to exit the WUR mode, and determines to wake up the main communication module. In other words, the main communication module of the terminal device enters the first state. Further, the terminal device may trigger the main communication module to perform a random access procedure, and notify the network that the terminal device exits the WUR mode.

The sixth information may be carried in a message 3 in a random access procedure.

For example, the sixth information is an identifier of the terminal device when the main communication module is in the second state or an identifier of the terminal device corresponding to the secondary communication module when the main communication module is in the second state.

Specifically, the terminal device may indicate, in a random access message 3, that an access reason is a WUR mode exit request, or the terminal device adds an ID of the terminal device in the WUR mode to the sent random access message 3. Optionally, the ID of the terminal device may alternatively be a WUR sequence or WUR sequence information corresponding to the terminal device. In other words, the terminal device may send the WUR sequence or the WUR sequence information of the terminal device to the network device in the random access message 3. Herein, the WUR sequence information may be an ID or an identifier of the WUR sequence.

It should be understood that the identifier of the terminal device in the first state may be different from the identifier of the terminal device in the second state. For example, the identifier of the terminal device in the first state is a UE ID, and the identifier of the terminal device in the second state may be a WUR ID defined in an NR standard.

Based on the foregoing solution, the terminal device and the network device can align a current state of the terminal device, for example, whether the terminal device is in the idle state, the inactive state, or the WUR mode. In this way, the network device can efficiently use a WUR resource for a specific terminal device.

Optionally, in this implementation scenario, the method 200 further includes: Before performing random access, the terminal device first performs cell selection, selects an appropriate cell to obtain system information, and then initiates a random access procedure.

Specifically, in an implementation, the terminal device performs cell selection by using the main communication module. For example, when the terminal device needs to exit the WUR mode, the terminal device first wakes up the main communication mode, and the main communication module performs cell selection and initiates random access. In another implementation, the terminal device performs cell selection by using the secondary communication module. For example, the secondary communication module performs cell selection based on a measurement result of the first WUR. The secondary communication module may notify the main communication module of a selected cell, and then the main communication module receives system information and initiates random access.

Optionally, in this implementation scenario, the method 200 further includes: The network device sends a response message for the sixth information to the terminal device, and correspondingly, the terminal device receives the response message, where the response message may be understood as a WUR mode exit message, and the response message includes a WUR mode exit indication.

Specifically, the terminal device may receive the WUR mode exit message from the network to obtain the WUR mode exit indication information, or the terminal device may obtain the WUR mode exit indication information from the RRC connection release message. The WUR mode exit message or the RRC connection release message may include indication information that is indicated by the network and that indicates that the terminal device enters the idle state or the inactive state after exiting the WUR mode. The terminal device determines, based on a state indicated by the network, to enter the idle state or the inactive state.

In addition, a message name and a specific form of the response message are not limited in this application.

In still another implementation scenario of the foregoing embodiment, the terminal device listens to second WUR by using the secondary communication module, where the second WUR indicates the terminal device to receive a paging message by using the main communication module, and when the secondary communication module detects the second WUR through listening, the terminal device switches the main communication module from the second state to the first state.

Specifically, the second WUR indicates the terminal device to receive the paging message by using the main communication module, or the second WUR indicates to wake up the main communication module, or the second WUR indicates the terminal device to switch the main communication module from the second state to the first state. When the main communication module is in the first state, the main communication module receives the paging message.

Optionally, in this implementation scenario, the method 200 further includes: sending downlink control information DCI to the terminal device, where the DCI includes scheduling information of a paging message, and the paging message is used to page the terminal device.

Specifically, in an implementation, if the network device determines that the terminal device is currently in the WUR mode, the network device determines that the main communication module of the terminal device is turned off, and the network device determines to wake up the terminal device by using the second WUR, to indicate the terminal device to receive the paging message. In other words, when the network device needs to page the terminal device, the network device sends the second WUR to the terminal device, and after detecting that the terminal device wakes up the second WUR, the terminal device sends a wake-up indication to the main communication module, to indicate the main communication module to receive the paging message. If the network device determines that the terminal device is not currently in the WUR mode, the network device may directly send the DCI to the terminal device, where the DCI includes the scheduling information of the paging message, and the terminal device may receive the paging message based on the scheduling information of the paging message. If the network device determines that the terminal device is not currently in the WUR mode, the network device does not need to send the second WUR to the terminal device.

In another implementation, if the network device does not know that the terminal device is currently in the WUR mode, when determining that the terminal device needs to be paged or woken up, the network device may send both the second WUR and the DCI. For example, the second WUR and the DCI may be sent in a same PO, to quickly wake up the terminal device to receive paging. If the terminal device is in the WUR mode, the main communication module of the terminal device is turned off. After detecting the second WUR, the terminal device sends a wake-up indication to the main communication module, to indicate the main communication module to receive the paging message. If the terminal device is not in the WUR mode, the main communication mode of the terminal device may directly receive the DCI, to further receive the paging message. In addition, in this implementation, the network device may first attempt, by using the second WUR, to wake up the main communication module of the terminal device to receive the paging message. If the terminal device still does not access the network after a period of time, the network may attempt to wake up, by using the DCI, the terminal device to receive the paging message.

A process in which the terminal device receives the paging message is described in FIG. 2 above, and details are not described herein again.

It should be understood that, in this application, if the terminal device is in the WUR mode, waking up the terminal device may include switching the main communication module from the second state to the first state, and may further include: receiving, by the main communication module, the paging message based on the DCI. If the terminal device is not in the WUR mode, waking up the terminal device includes: receiving, by the main communication module, the paging message based on DCI, where the DCI includes the scheduling information of the paging message.

Optionally, in this application, there are two cases in which the terminal device performs random access. In one case, after the main communication module switches to the first state, the main communication module is responsible for receiving the paging message, and after receiving the paging message, the main communication module performs random access. In the other case, after receiving the second WUR, the terminal device already knows that the terminal device is paged. For example, the second WUR has UE ID information, or the second WUR is in one-to-one correspondence with the terminal device. In this case, after the main communication module switches to the first state, the main communication module can directly perform random access.

Based on the foregoing solution, the terminal device in the WUR mode may determine, by monitoring the second WUR, whether to wake up the main communication module. In this way, the terminal device can achieve a good power saving effect, and it can be ensured that normal communication of the terminal device is not affected.

Optionally, in any one of the foregoing implementation scenarios, the method may further include: The network device sends first configuration information to the terminal device, and correspondingly, the terminal device receives the first configuration information.

The first configuration information is used to configure the first WUR and/or the second WUR, the first configuration information includes fifth information, and the fifth information indicates that the first WUR is used for measurement and/or the second WUR is used for wake-up. The first configuration information may also be referred to as WUR configuration information.

The fifth information may indicate WUR used for measurement in the communication system, that is, the fifth information indicates that the first WUR is used for measurement. Alternatively, the fifth information may indicate WUR used for waking up the terminal device in the communication system, that is, the fifth information indicates that the second WUR is used for wake-up.

Specifically, the WUR configuration information may include a table of a correspondence between WUR and a function of the WUR, and the WUR configuration information may include configuration information of to-be-woken-up WUR and/or to-be-measured WUR of the terminal device. The to-be-woken-up WUR (namely, the second WUR) of the terminal device indicates that the terminal device needs to receive the paging message, and the terminal device may also perform a signal measurement operation on the WUR. The to-be-measured WUR (namely, the first WUR) of the terminal device is used by the terminal device to measure signal quality. After performing measurement on one or more pieces of to-be-measured WUR, the terminal device may obtain quality information of a cell based on a measurement result of the one or more pieces of WUR. Optionally, the to-be-measured WUR may be to-be-woken-up WUR of another terminal device in the network.

In addition, a manner in which the terminal device receives the WUR configuration information sent by the network device may be: The terminal device in the connected state obtains the WUR configuration information from dedicated signaling sent by the network device, or the terminal device in the connected state, the idle state, or the inactive state obtains the WUR configuration information from a broadcast message sent by the network device.

Optionally, the first configuration information may further include the first condition and/or the second condition. For example, if the network device sends the first condition to the terminal device, the first condition may be sent in the first configuration information. If the network device sends the second condition to the terminal device, the second condition may be sent in the first configuration information.

Optionally, if the network device sends the second condition to the terminal device, the second condition may be carried in the WUR mode acknowledgment message.

Optionally, the first configuration information may be carried in the WUR mode acknowledgment message.

It should be understood that one or more of the first condition, the second condition, the first configuration information, and the like may be preconfigured in the terminal device, and do not need to be sent by the network device.

Optionally, the fifth information and the first WUR may be simultaneously sent. For example, to ensure that the terminal device can still have sufficient first WUR for measurement when there is no sufficient terminal device to receive the second WUR, where the second WUR may be used as the first WUR, and use specific indication information or specific short sequence information in combination, where the specific indication information or the specific short sequence information indicates that sending of the current WUR by the terminal device is used only to support measurement, and is not used to wake up a specific terminal device or does not indicate a specific terminal device to receive a paging message.

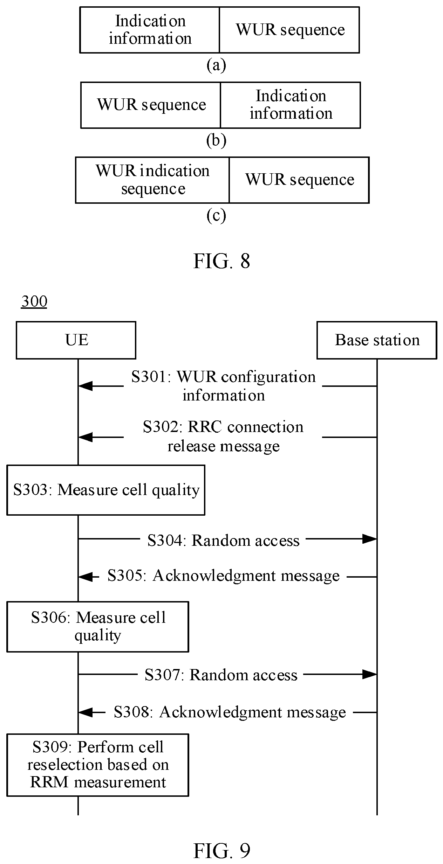

FIG. 8 is a diagram of information #A according to this application. A WUR sequence in FIG. 8 may be first WUR, and the first WUR is used to wake up a specific terminal device or indicates a specific terminal device to receive a paging message. As shown in (a) and (b) in FIG. 8, the information #A includes indication information (an example of the fifth information) and the WUR sequence. The indication information in (a) and that in (b) in FIG. 8 are respectively located on a left side and a right side of the WUR sequence. The indication information may indicate that the WUR sequence is used for measurement, and is not used to wake up the terminal device to receive the paging message. As shown in (c) in FIG. 8, the information #A includes a WUR indication sequence (an example of the fifth information) and the WUR sequence. The WUR indication sequence may indicate that the WUR sequence is used for measurement, and is not used to wake up the terminal device to receive the paging message.

Based on the foregoing solution, the network device may send the first configuration information and/or the fifth information to the terminal device, to indicate the terminal device to more accurately receive the first WUR and the second WUR, thereby ensuring performance of the terminal device in the WUR mode.

Optionally, in any one of the foregoing implementation scenarios, when the main communication module is in the second state, the terminal device does not listen to or update system information (system information, SI).

In this case, the method may further include: sending seventh information to the network device, where the seventh information indicates that the terminal device does not listen to or update the system information when the main communication module is in the second state.

For example, the terminal device may add the seventh information to a random access message.

Optionally, after the switching the main communication module from the second state to the first state, the method 200 further includes: The terminal device performs cell selection and receives the system information in a selected cell.

Specifically, the terminal device may indicate a type of the terminal device or a preference of the terminal device to the network, to indicate whether the terminal device needs to listen to a change of the system information after entering the WUR mode. If the terminal device indicates that the terminal device does not need to listen to the change of the SI, the terminal device does not listen to WUR of updated system information in the WUR mode. In this case, when subsequently exiting the WUR mode, the terminal device performs the cell selection operation, and re-receives the SI in the selected cell. The type of the terminal device may be whether the terminal device supports the WUR mode. If the terminal device supports the WUR mode, the terminal device may not listen to the system information in the WUR mode by default.

Optionally, that the terminal device does not listen to or update the system information may mean that the secondary communication module of the terminal device does not listen to or update the system information, or may mean that the main communication module does not listen to or update the system information.

Optionally, that the terminal device does not listen to or update the system information when the main communication module is in the second state includes: When the main communication module is in the first state and the second state, the terminal device does not listen to or update the system information. Alternatively, when the main communication module is in the first state, the terminal device listens to or updates the system information, and after the main communication module switches to the second state, the terminal device stops listening to or updating the system information. For example, when the main communication module is in the first state, the terminal device listens to or updates the system information by using the main communication module. After the main communication module switches to the second state, both the main communication module and the secondary communication module of the terminal device stop listening to or updating the system information.

Based on the foregoing solution, when the main communication module is in the second state, the terminal device does not listen to or update the system information, so that power consumption of the terminal device can be reduced to a greater extent.

It should be understood that in actual application, the foregoing implementation scenarios may be combined with each other, and this is not limited.

FIG. 9 is a schematic flowchart of a communication method 300 according to this application. The method 300 may be considered as a specific implementation of the method 200. The method 300 includes the following steps.

S301: A base station (an example of a network device) sends WUR configuration information to UE (an example of a terminal device).

The WUR configuration information includes indication information of to-be-measured WUR (an example of first WUR) and to-be-woken-up WUR (an example of second WUR).

Optionally, the WUR configuration information includes a condition #1 (an example of a first condition), and the condition #1 may be used as a determining condition for entering a WUR mode.

Optionally, when S301 is performed, the UE is in a connected state.

S302: The base station sends an RRC connection release message to the UE.

For example, the RRC connection release message indicates the UE to enter an idle state from the connected state. In this case, the UE may enter the idle state based on the RRC connection release message.

S303: The UE measures cell quality.

The UE in the idle state performs cell measurement based on an SSB or a CSI-RS, and determines whether a cell measurement result meets the condition #1. If the condition #1 is met, the UE first performs S304 and S305, and then enters the WUR mode.

S304: The UE initiates random access.

The UE requests to enter the WUR mode in Msg3.

S305: The base station sends an acknowledgment message to the UE.

The acknowledgment message may indicate that the UE is allowed to enter the WUR mode.

Optionally, the acknowledgment message may include a condition #2 (an example of a second condition), and the condition #2 may be used as a determining condition for exiting the WUR mode.

For example, steps S301 to S305 are all performed by the UE by using a main communication module.

S306: The UE measures cell quality.

The UE in the WUR mode performs cell measurement based on the to-be-measured WUR, and determines whether a cell measurement result meets the condition #2. If the condition #2 is met, the UE first wakes up the main communication module, that is, exits the WUR mode, and then performs S307 and S308.

For example, the UE performs S306 by using a secondary communication module.

For example, in a process of S306, the base station sends the to-be-measured WUR to the UE.

S307: The UE initiates random access.

The UE may indicate, in Msg4, that the UE has exited the WUR mode.

S308: The base station sends an acknowledgment message to the UE.

S309: The UE performs cell reselection based on RRM measurement.

For example, steps S307 to S309 are all performed by the UE by using the main communication module.

Based on the solution in the foregoing embodiment, the UE can be effectively controlled to enter or exit the WUR mode, thereby ensuring performance of the UE in the WUR mode.

In addition, when entering or exiting the WUR mode, the UE notifies, by using a random access procedure, a network of a related request or indication for entering or exiting the WUR mode, so that it can be ensured that the UE and the network device align a current state (that is, the idle state, an inactive state, or the WUR mode) of the UE. In this way, the network can efficiently use a WUR resource for specific UE.

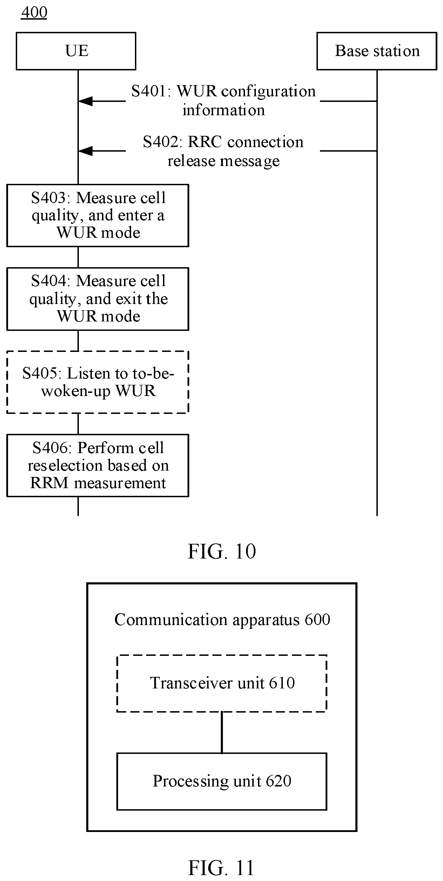

FIG. 10 is a schematic flowchart of a communication method 400 according to this application. The method 400 may be considered as a specific implementation of the method 200. The method 400 includes the following steps.

S401: A base station (an example of a network device) sends WUR configuration information to UE (an example of a terminal device).

The WUR configuration information includes indication information of to-be-measured WUR (an example of first WUR) and to-be-woken-up WUR (an example of second WUR).

Optionally, the WUR configuration information includes a condition #1 (an example of a first condition), and the condition #1 may be used as a determining condition for entering a WUR mode.

Optionally, the WUR configuration information includes a condition #2 (an example of a second condition), and the condition #2 may be used as a determining condition for exiting the WUR mode.

Optionally, when S301 is performed, the UE is in a connected state.

S402: The base station sends an RRC connection release message to the UE.

For example, the RRC connection release message indicates the UE to enter an idle state from the connected state. In this case, the UE may enter the idle state based on the RRC connection release message.

For example, the RRC connection release message further indicates the UE to enter an inactive state when exiting the WUR mode.

S403: The UE measures cell quality, and enters the WUR mode.

The UE in the idle state performs cell measurement based on an SSB or a CSI-RS, and determines whether a cell measurement result meets the condition #1. If the condition #1 is met, the UE enters the WUR mode.

For example, steps S401 to S403 are all performed by the UE by using a main communication module.

S404: The UE measures cell quality, and exits the WUR mode.

The UE in the WUR mode performs cell measurement based on the to-be-measured WUR, and determines whether a cell measurement result meets the condition #2. If the condition #2 is met, the UE wakes up the main communication module, that is, exits the WUR mode.

In addition, the UE may exit to the inactive state according to an indication of the RRC connection release message. The UE in the WUR mode listens to the to-be-woken-up WUR, and if the to-be-woken-up WUR is detected through listening, the UE wakes up the main communication module.

For example, in a process of S404, the base station sends the to-be-measured WUR to the UE.

S405: The UE listens to the to-be-woken-up WUR.

Optionally, the UE in the WUR mode may listen to the to-be-woken-up WUR, and if the to-be-woken-up WUR is detected through listening, the UE wakes up the main communication module.

For example, in a process of S405, the base station sends the to-be-woken-up WUR to the UE.

For example, the UE performs S404 and S405 by using a secondary communication module.

S406: The UE performs cell reselection based on RRM measurement.

For example, the UE performs S405 and S406 by using the main communication module.

Based on the foregoing solution, the UE can be effectively controlled to enter or exit the WUR mode, and a state of the UE after the UE exits the WUR mode can be controlled, thereby ensuring performance of the UE in the WUR mode. In addition, this solution can further avoid a random access procedure, so that signaling overheads of the terminal can be reduced.

It should be understood that the method 300 and the method 400 are two specific implementations of this application, and are intended to better understand this application, but do not constitute a limitation on the solutions of this application.

The foregoing describes in detail the technical solutions provided in the communication methods in embodiments of this application with reference to FIG. 1 to FIG. 10. The following describes communication apparatuses provided in embodiments of this application with reference to FIG. 11 to FIG. 13.

FIG. 11 is a block diagram of a communication apparatus according to an embodiment of this application. As shown in FIG. 11, the apparatus 600 may include a processing unit 620. The processing unit 620 is configured to process data/information, so that a function of the terminal device in the method 200, the method 300, or the method 400 is implemented, or a function of the network device in the method 200, the method 300, or the method 400 is implemented.

Optionally, the apparatus 600 may further include a transceiver unit 610. The transceiver unit 610 may communicate with the outside. For example, the transceiver unit 610 may input externally received data/information to the processing unit. For another example, the transceiver unit 610 may output externally data/information processed by the processing unit. The transceiver unit 610 may also be referred to as a communication interface or a communication unit.

In a possible implementation, the apparatus 600 may be the terminal device in the method 200, the method 300, or the method 400, or may be a chip configured to implement a function of the terminal device in the method 200, the method 300, or the method 400. Specifically, the apparatus 600 may implement a procedure performed by the terminal device in the method 200, the method 300, or the method 400. The processing unit 620 is configured to perform a processing-related operation of the terminal device in the foregoing method procedure.

For example, the processing unit 620 is configured to obtain first information, where the first information is used to change a state of a main communication module of the terminal device, and the terminal device includes the main communication module and a secondary communication module. The processing unit 620 is further configured to switch the main communication module from a first state to a second state based on the first information, where the first state includes: the main communication module is in an idle state, an inactive state, or a connected state.

Optionally, in this implementation, the apparatus 600 further includes the transceiver unit 610. The transceiver unit 610 is configured to perform receiving and sending related operations of the terminal device in the foregoing method procedure, for example, send second information to a network device.

It should be understood that the processing unit 620 and the transceiver unit 610 may further separately perform any other step, operation, and/or function implemented by the terminal device in the method 200, 300, or 400. A specific process of performing the foregoing corresponding step by each unit is described in detail in the foregoing method embodiment. For brevity, details are not described herein again.

In another possible implementation, the apparatus 600 may be the network device in the method 200, the method 300, or the method 400, or may be a chip configured to implement a function of the network device in the method 200, the method 300, or the method 400. Specifically, the apparatus 600 may implement a procedure performed by the network device corresponding to the method 200, the method 300, or the method 400. The transceiver unit 610 is configured to perform receiving and sending related operations of the network device in the foregoing method procedure, and the processing unit 620 is configured to perform a processing related operation of the network device in the foregoing method procedure.

For example, the processing unit 620 is configured to determine first information, where the first information is used by a terminal device to switch a main communication module from a first state to a second state, the first state includes: the main communication module is in an idle state, an inactive state, and a connected state, and the terminal device includes the main communication module and a secondary communication module. The transceiver unit 610 is configured to send the first information to the terminal device.

It should be understood that the processing unit 620 and the transceiver unit 610 may further separately perform any other step, operation, and/or function implemented by the network device in the method 200, 300, or 400. A specific process of performing the foregoing corresponding step by each unit is described in detail in the foregoing method embodiment. For brevity, details are not described herein again.

It should be further understood that, in any one of the foregoing implementations, the transceiver unit 610 may include a receiving unit 611 and a sending unit 612. The receiving unit 611 is configured to perform a receiving function in the transceiver unit 610, and the sending unit 612 is configured to perform a sending function in the transceiver unit 610.

The apparatus 600 has a function of implementing corresponding steps performed by the terminal device in the method 200, the method 300, or the method 400, or the apparatus 600 has a function of implementing corresponding steps performed by the network device in the method 200, the method 300, or the method 400. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

In addition, the transceiver unit may alternatively be a transceiver circuit (for example, may include a receiving circuit and a sending circuit), and the processing unit may be a processing circuit. In embodiments of this application, the apparatus 600 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

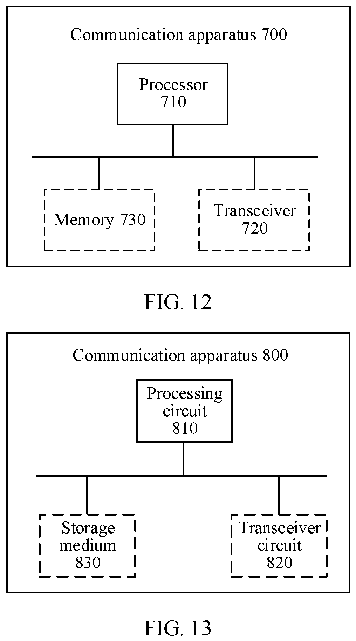

FIG. 12 is another block diagram of a communication apparatus according to an embodiment of this application. As shown in FIG. 12, the communication apparatus 700 includes at least one processor 710. The processor 710 is configured to perform instructions, so that a function of the terminal device in the method 200, the method 300, or the method 400 is implemented, or a function of the network device in the method 200, the method 300, or the method 400 is implemented.

Optionally, the apparatus 700 may further include a transceiver 720. The transceiver 720 is configured to send a signal and/or receive a signal.

Optionally, the communication apparatus 700 further includes a memory 730, configured to store instructions. The processor 710 is coupled to the memory, and is configured to execute the instructions stored in the memory, to control the transceiver 720 to send a signal and/or receive a signal.

It should be understood that the processor 710 and the memory 730 may be combined into one processing apparatus, and the processor 710 is configured to execute program code stored in the memory 730 to implement the foregoing functions. In a specific implementation, the memory 730 may alternatively be integrated into the processor 710, or be independent of the processor 710.

It should be further understood that the transceiver 720 may include a receiver (or referred to as a receiver machine) and a transmitter (or referred to as a transmitter machine). The transceiver 720 may further include an antenna. There may be one or more antennas. The transceiver 1020 may be a communication interface or an interface circuit.

When the communication apparatus 700 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may implement the method in the foregoing method embodiment.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

FIG. 13 is another diagram of a structure of a communication apparatus according to an embodiment of this application. As shown in FIG. 13, the apparatus 800 includes a processing circuit 810. The processing circuit 810 is configured to perform instructions, so that a function of the terminal device in the method 200, the method 300, or the method 400 is implemented, or a function of the network device in the method 200, the method 300, or the method 400 is implemented.

Optionally, the apparatus 800 may further include a transceiver circuit 820. The processing circuit 810 and the transceiver circuit 820 communicate with each other by using an internal connection path, and the processing circuit 810 may control the transceiver circuit 820 to send a signal and/or receive a signal.

Optionally, the apparatus 800 may further include a storage medium 830. The storage medium 830 communicates with the processing circuit 810 and the transceiver circuit 820 by using an internal connection path. The storage medium 830 is configured to store instructions, and the processing circuit 810 may execute the instructions stored in the storage medium 830.

In a possible implementation, the apparatus 800 is configured to implement a procedure corresponding to the terminal device in the foregoing method embodiment.

In another possible implementation, the apparatus 800 is configured to implement a procedure corresponding to the network device in the foregoing method embodiment.

According to the method provided in embodiments of this application, this application further provides a computer program product. The computer program product includes instructions. When the instructions are run by a processor, a function of the terminal device in the method 200, the method 300, or the method 400 is implemented, or a function of the network device in the method 200, the method 300, or the method 400 is implemented.

According to the method provided in embodiments of this application, this application further provides a computer-readable storage medium. The computer-readable storage medium includes instructions. When the instructions are run by a processor, a function of the terminal device in the method 200, the method 300, or the method 400 is implemented, or a function of the network device in the method 200, the method 300, or the method 400 is implemented.

According to the method provided in embodiments of this application, this application further provides a system. The system includes the foregoing one or more terminal devices and the foregoing one or more network devices.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that the names of various nodes and messages are limited in this application. On the contrary, any name that has a same or similar function as the node or the message used in this application is considered as a method or an equivalent replacement in this application, and falls within the protection scope of this application.

It should be further understood that, in this application, "when" and "if" mean that the UE or the base station performs corresponding processing in an objective situation, are not intended to limit time, do not require the UE or the base station to necessarily perform a determining action during implementation, and do not mean another limitation.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." or "at least one piece of..." in this specification represents all or any combination of the listed items. For example, "at least one of A, B, and C" or "at least one of A, B, or C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining first information, wherein the first information is used to change a state of a main communication module of a terminal device, and the terminal device comprises the main communication module and a secondary communication module; and
switching the main communication module from a first state to a second state based on the first information, wherein the first state comprises: the main communication module is in an idle state, an inactive state, and a connected state.

2. The method according to claim 1, wherein the first information comprises a first condition, the first condition is used to evaluate quality of a first service area of the terminal device, and the first service area is a service area of the terminal device when the main communication module is in the first state; and
the switching the main communication module from a first state to a second state based on the first information comprises:
when the quality of the first service area meets the first condition, switching the main communication module from the first state to the second state.

3. The method according to claim 2, wherein the first condition comprises at least one of the following:
a variation of the quality of the first service area within a first time threshold is less than a first variation threshold, wherein the first time threshold is greater than a time threshold in a low mobility criterion, or the first variation threshold is less than a variation threshold in a low mobility criterion;
the quality of the first service area is greater than a first quality threshold, wherein the first quality threshold is greater than a threshold in a cell center criterion; and
the quality of the first service area is greater than a second quality threshold, wherein the second quality threshold is greater than a threshold in an S criterion.

4. The method according to claim 2 or 3, wherein when the quality of the first service area meets the first condition, the terminal device stops performing measurement on a high-priority frequency.

5. The method according to any one of claims 2 to 4, wherein the method further comprises:
sending second information to the network device, wherein the second information is used to request to change the state of the main communication module or indicates that the state of the main communication module changes.

6. The method according to any one of claims 2 to 5, wherein the method further comprises:
receiving third information from the network device, wherein the third information indicates that the network device allows the terminal device to switch the main communication module from the first state to the second state.

7. The method according to claim 1, wherein the first information indicates to switch the main communication module from the first state to the second state.

8. The method according to claim 7, wherein the method further comprises:
sending a measurement result of a first service area to the network device, wherein the first service area is a service area of the terminal device when the main communication module is in the first state.

9. The method according to any one of claims 1 to 8, wherein the method further comprises:
sending fourth information to the network device, wherein the fourth information indicates that the terminal device tends to enter the idle state when exiting the connected state, or tends to enter the inactive state when exiting the connected state, or tends to enter the second state when exiting the connected state.

10. The method according to any one of claims 1 to 9, wherein the method further comprises:
receiving first wake-up radio WUR by using the secondary communication module, wherein the first WUR is used to determine quality of a second service area of the terminal device, and the second service area is a service area of the terminal device when the main communication module is in the second state; and
when the quality of the second service area does not meet a second condition, switching the main communication module from the second state to the first state.

11. The method according to claim 10, wherein the second condition comprises at least one of the following:
a variation of the quality of the second service area within a second time threshold is less than a second variation threshold, wherein the second time threshold is greater than a time threshold in a low mobility criterion, or the second variation threshold is less than a variation threshold in a low mobility criterion;
the quality of the second service area is greater than a third quality threshold, wherein the third quality threshold is greater than a threshold in a cell center criterion; and
the quality of the second service area is greater than a fourth quality threshold, wherein the fourth quality threshold is greater than a threshold in an S criterion.

12. The method according to claim 10 or 11, wherein the method further comprises:
receiving the second condition from the network device.

13. The method according to any one of claims 10 to 12, wherein the method further comprises:
sending sixth information to the network device, wherein the sixth information indicates that the state of the main communication module changes.

14. The method according to claim 13, wherein the sixth information is an identifier of the terminal device when the main communication module is in the second state or an identifier of the terminal device corresponding to the secondary communication module when the main communication module is in the second state.

15. The method according to any one of claims 1 to 9, wherein the method further comprises:
listening to second WUR by using the secondary communication module, wherein the second WUR indicates the terminal device to receive a paging message by using the main communication module; and
switching the main communication module from the second state to the first state when the second WUR is detected through listening.

16. The method according to any one of claims 10 to 15, wherein the method further comprises:
receiving first configuration information from the network device, wherein the first configuration information is used to configure the first WUR and/or the second WUR, the first configuration information comprises fifth information, and the fifth information indicates that the first WUR is used for measurement and/or the second WUR is used for wake-up.

17. The method according to any one of claims 10 to 16, wherein when the main communication module switches from the second state to the first state, the method further comprises:
switching from the second state to the idle state or the inactive state based on an RRC release message or an RRC reconfiguration message, wherein the RRC release message or the RRC reconfiguration message indicates that the first state needs to be selected as the idle state or the inactive state when the terminal device switches from the second state to the first state.

18. The method according to any one of claims 1 to 17, wherein when the main communication module is in the second state, the terminal device does not listen to or update system information.

19. The method according to claim 18, wherein the method further comprises:
sending seventh information to the network device, wherein the seventh information indicates that the terminal device does not listen to or update the system information or stops listening to or updating the system information when the main communication module is in the second state.

20. The method according to claim 18 or 19, wherein after the switching the main communication module from the second state to the first state, the method further comprises:
performing cell selection and receiving the system information in a selected cell.

21. The method according to any one of claims 1 to 20, wherein when the main communication module is in the first state, the secondary communication module is in a third state or a fourth state, wherein the third state comprises: the secondary communication module is in an on state, a working state, or an active state, and the fourth state comprises: the secondary communication module is in an off state, a dormant state, or an inactive state.

22. A communication method, wherein the method comprises:
determining first information, wherein the first information is used by a terminal device to switch a main communication module from a first state to a second state, the first state comprises: the main communication module is in an idle state, an inactive state, and a connected state, and the terminal device comprises the main communication module and a secondary communication module; and
sending the first information to the terminal device.

23. The method according to claim 22, wherein the first information comprises a first condition, the first condition is used to evaluate quality of a first service area of the terminal device, the first service area is a service area of the terminal device when the main communication module is in the first state, and the first condition comprises at least one of the following:
a variation of the quality of the first service area within a first time threshold is less than a first variation threshold, wherein the first time threshold is greater than a time threshold in a low mobility criterion, or the first variation threshold is less than a variation threshold in a low mobility criterion;
the quality of the first service area is greater than a first quality threshold, wherein the first quality threshold is greater than a threshold in a cell center criterion; and
the quality of the first service area is greater than a second quality threshold, wherein the second quality threshold is greater than a threshold in an S criterion.

24. The method according to claim 22 or 23, wherein the method further comprises:
receiving second information from the terminal device, wherein the second information is used to request to change the state of the main communication module or indicates that the state of the main communication module changes.

25. The method according to any one of claims 22 to 24, wherein the method further comprises:
sending third information to the terminal device, wherein the third information indicates that the terminal device is allowed to switch the main communication module from the first state to the second state.

26. The method according to claim 22, wherein the first information indicates to switch the main communication module from the first state to the second state.

27. The method according to claim 26, wherein the method further comprises:
receiving a measurement result of a first service area from the terminal device, wherein the first service area is a service area of the terminal device when the main communication module is in the first state; and
the sending the first information to the terminal device comprises:
when the measurement result of the first service area meets a preset condition, sending the first information to the terminal device.

28. The method according to any one of claims 22 to 27, wherein the method further comprises:
receiving fourth information from the terminal device, wherein the fourth information indicates that the terminal device tends to enter the idle state when exiting the connected state, or tends to enter the inactive state when exiting the connected state, or tends to enter the second state when exiting the connected state; and
the sending the first information to the terminal device comprises:
when the fourth information indicates that the terminal device tends to enter the second state when exiting the connected state, sending the first information to the terminal device.

29. The method according to any one of claims 22 to 28, wherein the method further comprises:
sending first wake-up radio WUR to the terminal device, wherein the first WUR is used to determine quality of a second service area of the terminal device, and the second service area is a service area of the terminal device when the main communication module is in the second state.

30. The method according to any one of claims 22 to 29, wherein the method further comprises:
sending a second condition to the terminal device, wherein the second condition comprises at least one of the following:
a variation of the quality of the second service area within a second time threshold is less than a second variation threshold, wherein the second time threshold is greater than a time threshold in a low mobility criterion, or the second variation threshold is less than a variation threshold in a low mobility criterion;
the quality of the second service area is greater than a third quality threshold, wherein the third quality threshold is greater than a threshold in a cell center criterion; and
the quality of the second service area is greater than a fourth quality threshold, wherein the fourth quality threshold is greater than a threshold in an S criterion.

31. The method according to claim 29 or 30, wherein the method further comprises:
sending sixth information to a network device, wherein the sixth information indicates that the state of the main communication module changes.

32. The method according to claim 31, wherein the sixth information is an identifier of the terminal device when the main communication module is in the second state or an identifier of the terminal device corresponding to the secondary communication module when the main communication module is in the second state.

33. The method according to any one of claims 22 to 28, wherein the method further comprises:
sending second WUR to the terminal device, wherein the second WUR indicates the terminal device to receive a paging message by using the main communication module.

34. The method according to claim 33, wherein the method further comprises:
sending downlink control information DCI to the terminal device, wherein the DCI comprises scheduling information of a paging message, and the paging message is used to page the terminal device.

35. The method according to any one of claims 29 to 34, wherein the method further comprises:
sending first configuration information to the terminal device, wherein the first configuration information is used to configure the first WUR and/or the second WUR, the first configuration information comprises fifth information, and the fifth information indicates that the first WUR is used for measurement and/or the second WUR is used for wake-up.

36. The method according to any one of claims 22 to 35, wherein the method further comprises:
sending the RRC release message or the RRC reconfiguration message to the terminal device, to indicate that the first state needs to be selected as the idle state or the inactive state when the terminal device switches from the second state to the first state.

37. The method according to any one of claims 22 to 36, wherein the method further comprises:
receiving seventh information from the terminal device, wherein the seventh information indicates that the terminal device does not listen to or update system information or stops listening to or updating system information when the main communication module is in the second state.

38. A communication apparatus, comprising a unit or a module configured to perform the method according to any one of claims 1 to 21, or a unit or a module configured to perform the method according to any one of claims 22 to 37.

39. A computer-readable storage medium, wherein the computer-readable storage medium comprises instructions, and when the instructions are run by a processor, the method according to any one of claims 1 to 21 or the method according to any one of claims 22 to 37 is implemented.

40. A communication apparatus, wherein the communication apparatus comprises a processor and a storage medium, the storage medium stores instructions, and when the instructions are run by the processor, the method according to any one of claims 1 to 21 or the method according to any one of claims 22 to 37 is implemented.

41. A computer program product, wherein the computer program product comprises instructions, and when the instructions are run by a processor, the method according to any one of claims 1 to 21 or the method according to any one of claims 22 to 37 is implemented.
